# EUROPEAN PATENT SPECIFICATION

(11) **EP 2 127 537 B1**
(45) Date of publication and mention of the grant of the patent: **27.02.2013**
(21) Application number: 08703381.7
(22) Date of filing: 17.01.2008
(51) Int. Cl.: A23L 1/16

(54) **GROOVED NOODLES AND PROCESS FOR PRODUCING THE SAME**
GERILLTE NUDELN UND VERFAHREN ZU IHRER HERSTELLUNG
NOUILLES CANNELÉES ET LEUR PROCÉDÉ DE FABRICATION

(30) Priority: 25.01.2007 JP 2007014854; 03.08.2007 JP 2007202814; 03.09.2007 JP 2007227417; 03.09.2007 JP 2007227504; 30.10.2007 JP 2007281354
(43) Date of publication of application: 02.12.2009
(73) Proprietor: Nisshin Foods Inc., Tokyo 101-8441 (JP); Mama-Macaroni Co., Ltd., Utsunomiya City Tochigi 321-0905 (JP)
(72) Inventor: FUJITA, Akio, Chuo-ku Tokyo 103-8544 (JP); KAJIO, Fusaki, Chuo-ku Tokyo 103-8544 (JP); TSUTIYA, Naoyuki, Chuo-ku Tokyo 103-8544 (JP); ASAHINA, Kenta, Chuo-ku Tokyo 103-8544 (JP); KOYAJIMA, Satoru, Utsunomiya City Tochigi 321-0905 (JP); OBA, Yuki, Utsunomiya City Tochigi 321-0905 (JP)
(74) Representative: Dossmann, Gérard
(86) International application number: PCT/JP2008/050526
(87) International publication number: WO 2008/090802

(56) References cited:
- FR-A1- 2 738 461
- JP-A- 02 200 155
- JP-A- 03 280 849
- JP-A- 04 211 337
- JP-A- 05 244 886
- JP-A- 07 246 054
- JP-A- 09 009 855
- JP-A- 09 154 514
- JP-A- 10 146 161
- JP-A- 58 175 459
- JP-A- 60 006 172
- JP-A- 63 248 366
- JP-A- 2001 017 104
- JP-A- 2004 129 538
- US-A- 4 752 205

## Description

### TECHNICAL FIELD

The present invention relates to grooved noodles having grooves formed along the longitudinal direction of a single noodle band, and a process for producing the same. In particular, the present invention relates to grooved noodles according to the preamble of claim 1 as they are for example known from FR 2 738 461.

### BACKGROUND ART

In the past, there have been proposed noodles having slits and grooves along the longitudinal direction of the noodle band with the objective of achieving a shortened boiling time [refer to JP 58-175459 A (PATENT DOCUMENT 1) and JP 60-6172 A (PATENT DOCUMENT 2), for example]. Then, a dry noodle with a substantially circular cross-section having one such single wedge-shaped groove became commercially available. Additionally, in JP 10-146161 A (PATENT DOCUMENT 3), described is a noodle of a substantially circular shape having a single wedge-shaped groove wherein the strength of the noodle band is improved by drying an extruded noodle under certain conditions, thereby making it possible to form a deeper groove so as to further shorten the boiling time, and wherein bending of the noodle band is prevented by making the tip area of the wedge-shaped groove have a curved surface. In JP 2001-17104 A (PATENT DOCUMENT 4), described is a method of providing in the longitudinal direction of the noodle band four equally spaced grooves having a substantially rectangular shape of a depth of 20 to 30% of the diameter of the circular-shaped cross-section, so as to achieve a spaghetti that has a fast boiling time and is capable of achieving a favorable texture that retains a bit of firmness at the center.

Further, in JP 2-200155 A (PATENT DOCUMENT 5), described is a grooved extruded noodle having a rectangular-shaped cross-section of the noodle band, comprising a long side dimension equivalent to 1.5 to 4 times that of the short side dimension, wherein a pair of mutually symmetrical grooves is provided in the longitudinal direction of the noodle band in the center area of the two short sides of the rectangular shape, expanding toward the center from the surface of the noodle band, and having an opening width equivalent to 20 to 50% of the dimension of the short side, and a depth equivalent to 30 to 45% of the dimension of the long side. Then, a noodle-shaped pasta having such features is described as exhibiting a reduced boiling time from 15 minutes in a case of a non-grooved pasta to 6 to 7 minutes when the cross-section is a 4.0 mm x 2.0 mm rectangular shape, and from 12 minutes in a case of a non-grooved pasta to 4 to 5 minutes when the cross-section is a 3.0 mm x 1.5 mm rectangular shape.

PATENT DOCUMENT 1: JP 58-175459 A
PATENT DOCUMENT 2: JP 60-6172 A
PATENT DOCUMENT 3: JP 10-146161 A
PATENT DOCUMENT 4: JP 2001-17104 A
PATENT DOCUMENT 5: JP 2-200155 A

In US 4,752,205A an extruded elongate pasta is disclosed, each pasta strand having at least one groove formed longitudinally in the pasta strand in such a manner that the total cross sectional area of the groove is 2 to 25% of the cross sectional area of the pasta strand, and the groove in the pasta strand is substantially closed after the elongate pasta is boiled or dipped in hot water. A die structure for extruding the elongate pasta is also disclosed, the die structure being so arranged that a projection is projected toward the axis of a die hole from the inner surface of the die hole and that the coefficient of friction of the inner surface of the die hole is 0.4 or less. It is preferable that a tapered portion is formed on the upstream end of the projection. Further, an extruder for forming the elongate pastas which has a number of such die holes is also disclosed, in which projections of the die holes are projected perpendicularly to the aligning direction of the die holes.

JP2004129538, in order to provide grooved instant noodles reconstitutable in a short time regardless of the width or thickness of noodle ribbons, causing elongation of the reconstituted noodles when boiled, and maintaining a good palate feeling with springiness and feeling on the tongue similar to those of boiled-up noodle, where flavor inherent in soup is kept alive, discloses instant noodles have grooves along the longitudinal direction of the noodle ribbons. The cross section of the grooves is formed into a wedged-shape cut in its center direction. The groove depth of the noodle accounts for 10-40% of the thickness of the noodle, the center angle thereof is 30-100 °C, and the specific gravity of the noodle is 1.35-1.65 g/cm³.

JP3280849, in order to obtain the title noodle strips being short in boiling time therefor, each having a pair of grooves which is closed after cooking and with good appearance by providing a pair of grooves oppositely from two diagonal tops of the strip toward the another diagonal line of the strip whose form of cross section is parallelogram, discloses a noodle strip in which dimensional ratio of a long side to a short side of cross section face thereof is (2:1) to (3:2) (preferably having a 2-6mm long side (l) and a 1.0-3mm short side (m)) is used and a pair of grooves is oppositely provided from two diagonal tops toward another diagonal line (A to C) in the cross section face of the noodle strip, to be point- symmetrically to the cross over point of the two diagonal lines and as the center point.

In JP 4211337, in order to produce spaghetti type pasta, which has the representative sensitive features among similar products on the market, characterized in short boiling time, discloses a spaghetti type pasta forming a single section having a non-hollow central part and three lengthwisely parallel protruding parts partitioned by grooves mutually at intervals at 120 °, the balance between the shape of structural components and the dimension is suitable for quick boiling especially with satisfactory masticatory property.

In JP5244886 (A), in order to provide the subject noodles enabling their heating and cooking time to be shortened, excellent in palate feeling, useful for spaghetti, etc., so designed that grooves of a specified depth are provided along noodle ribbons and the area associated with the groove portions accounts for a specified proportion of the imaginary cross-sectional area of the noodle ribbons, the objective noodles have the following characteristics: (1) grooves are provided along noodle ribbons and the depth of each groove is one-third to two-third of the thickness of each noodle ribbon; and (2) the area associated with the groove accounts for 2-25% of the imaginary cross-sectional area of the noodle ribbon.

### DISCLOSURE OF THE INVENTION

### PROBLEMS TO BE SOLVED BY THE INVENTION

An explanation will be made about a dry spaghetti noodle as one example of the various noodles available. A dry spaghetti noodle without any slits or grooves requires a cooking time of 10-odd minutes, which includes the time until the water boils and the boiling time. A similar amount of time is also required in a case where the spaghetti is boiled in a microwave. In contrast, adding slits and grooves to the noodle makes it possible to reduce the boiling time to less than that required for a non-grooved noodle.

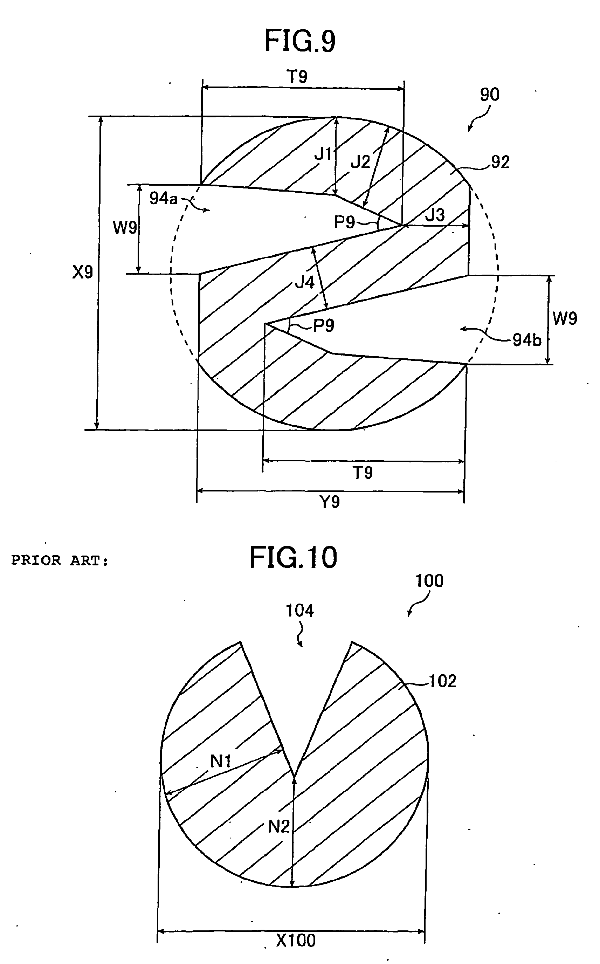

FIG. 10 shows the cross-sectional shape of a commercially available grooved noodle known from the prior art. A grooved noodle 100 of FIG. 10 comprises a substantially circular cross-section 102 having a diameter X100, and a V-shaped groove 104 of an isosceles triangular shape that is somewhat deeper than the radius of the cross-section at one location thereof. In FIG. 10, N1 and N2 indicate the thickness of the cross-section 102. Such a grooved noodle of prior art reduces the boiling time by a maximum of one-half in comparison to that of a non-grooved noodle. Nevertheless, the boiling time of this grooved noodle requires five minutes for spaghetti having a 1.7 mm diameter, and three minutes for spaghetti having a 1.5 mm diameter, and the required cooking time is about 10 minutes, including the time until the water boils and the boiling time. While nowadays pasta is also boiled by placing pasta and water in a container and heating the container in a microwave oven, the microwave cooking time for the above-described grooved noodle requires about 7 to 10 minutes. Any further reductions in boiling time have yet to be achieved.

It is therefore an object of the present invention to provide noodles which require a highly shortened boiling time compared with non-grooved noodles and are still comparable to non-grooved noodles in appearance, taste, and texture after cooking, and a process for producing the same.

### MEANS TO SOLVE THE PROBLEMS

To solve the above-described problems, the invention provides grooved noodles according to claims 1 and 6 as well as methods for providing grooved noodles according to claims 5 and 10. The dependent claims relate to advantageous embodiments.

### EFFECTS OF THE INVENTION

According to the noodles and process for producing the same of the present invention, it is possible to obtain noodles having a boiling time that has been shortened to about one-third or less of the boiling time of non-grooved noodles and are still comparable to non-grooved noodles in appearance, taste, and texture after cooking.

### BRIEF DESCRIPTION OF THE DRAWINGS

FIG. is a cross-sectional view of embodiment 1 of a grooved noodle according to the present invention.
FIG. 2 is a cross-sectional view of embodiment 2 of a grooved noodle according to the present invention.
FIG. 3 is a cross-sectional view of an illustrative example of a first grooved noodle not falling under the scope of the claims.
FIG. 4 is a cross-sectional view of an illustrative example of a second grooved noodle not falling under the scope of the claims.
FIG. 5 is a cross-sectional view of an illustrative example of a third grooved noodle not falling under the scope of the claims.
FIG. 6 is a cross-sectional view of fourth grooved noodle not falling under the scope of the claims.
FIG. 7 is a cross-sectional view of an illustrative example of a fifth grooved noodle not falling under the scope of the claims.
FIG. 8 is a cross-sectional view of an illustrative example of a sixth grooved noodle not falling under the scope of the claims.
FIG. 9 is a cross-sectional view of embodiment 3 of a grooved noodle according to the present invention.
FIG. 10 shows the cross-sectional shape of a grooved noodle of prior art.

### DESCRIPTION OF SYMBOLS

10, 20, 30, 40, 50, 60, 70, 80, 90, 100 NOODLE
12, 22, 32, 42, 52, 62, 72, 82, 92, 102 CROSS-SECTION
14, 16, 24, 26, 34, 36, 44, 54, 64, 66, 74, 76, 78, 84, 86, 94, 104 GROOVE

### BEST MODE FOR CARRYING OUT THE INVENTION

The following describes in detail the grooved noodles and process for producing the same of the present invention based on the preferred embodiments illustrated in accompanying drawings. In the description, up, down, left, and right are in accordance with the descriptions of the drawings.

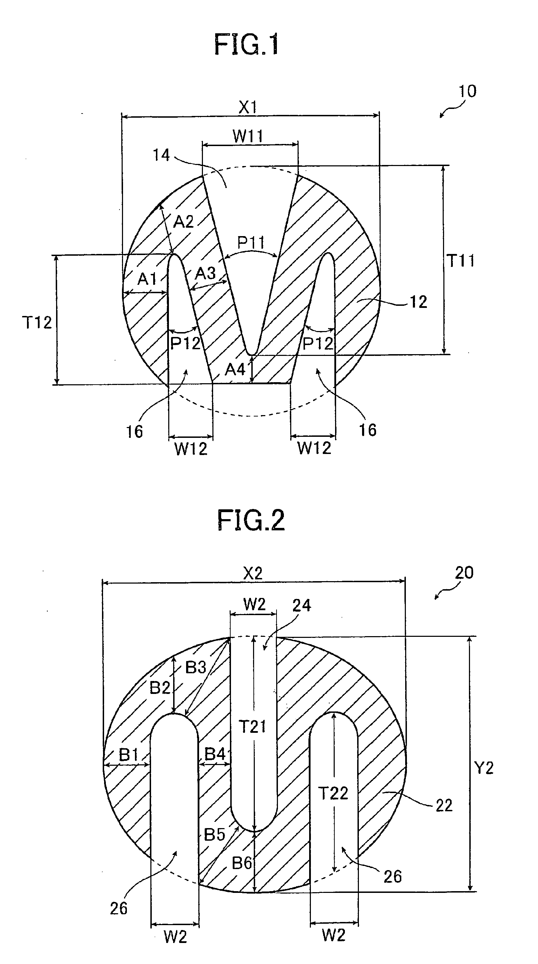

FIG. 1 shows the general shape of the cross-section (transverse section) orthogonal to the vertical direction (longitudinal direction) of a single noodle band of a noodle 10 of embodiment 1 of the grooved noodles according to the present invention.
In the noodle 10 shown in FIG. 1, a cross-section 12 thereof has a shape of a circle with a diameter X1, and is provided with one V-shaped groove 14 from the upper side and, on each side of the groove 14, two V-shaped grooves 16 and 16 from the lower side. Furthermore, the noodle 10 is formed so that the noodle band between the two lower grooves 16 and 16 in the FIG. 1 is cut out at substantially the same position as the line that connects the opening ends on the outer side of the grooves 16 and 16. The major outer shape of the cross-section 12 is a circle having the diameter X1, and the diameter X1, which is the maximum diameter of the cross-section 12, is 1.2 mm to 3.0 mm.
The noodle 10 absorbs water when boiled, causing the noodle band section to swell and change shape, thereby filling the grooves 14, 16 and 16 and making the cross-section become substantially circular in shape prior to eating.

In the cross-section 12 of the noodle 10, the three grooves 14, 16, and 16 are staggered and disposed symmetrically with respect to the line that runs through the center of the cross-section 12 (in FIG. 1, the line drawn vertically through the center). In the cross-section 12, the groove 14 comprises a V-shape that widens toward the outer periphery side and has an acute point angle P11 with the tip thereof positioned toward the inside of the noodle 10. Further, the grooves 16 and 16 each comprise a V-shape that widens toward the outer periphery side and has an acute point angle P12 with the point thereof positioned toward the inside of the noodle 10.

In the embodiment of FIG. 1, as a preferred form, the two sides of the groove 14 are each substantially parallel with the corresponding opposing side of the groove 16, and a thickness A3 of the area of the noodle band section between the groove 14 and the groove 16 is substantially constant. While in the embodiment of FIG. 1 the side on the outer periphery side of the groove 16 is a straight line, one location or two or more locations in the middle thereof may be bent at an obtuse angle so as to reduce the size of a thickness A1 of the area of the noodle band section between the groove 16 and the outer periphery.

The groove 14 and the grooves 16 and 16 are provided symmetrically with respect to the centerline of the cross-section 12 so that the cross-section 12 has an axisymmetrical shape, thereby making it possible to achieve stable producability, a substantially circular or substantially elliptical cross-sectional shape of the boiled noodle, and a favorable outer appearance, taste, and texture of the noodle 10.

The groove 14 and the grooves 16 and 16 are each formed deeper than the center of the cross-section 12. In this manner, a depth T11 of the groove 14 and a depth T12 of the groove 16, that is, the lengths T11 and T12 of the vertical lines from the tips of the groove 14 and the groove 16 to the opening end surfaces, are both preferably greater than one-half of the length of the cross-section 12 in the formation direction (vertical direction in FIG. 1) of the groove 14 and the groove 16.
The groove 14 and the groove 16 are formed deeper than the center of the cross-section 12, making it possible to reduce the size of a thickness A4 of the area of the noodle band section following the tip of the groove 14 and a thickness A2 of the area of the noodle band section following the tip of the groove 16, and reduce the size of the thickness between the arc of the cross-section 12 and the side on the arc side of the groove 16 indicated by A1 in FIG. 1.

As described above, the noodle 10 absorbs water when boiled, causing the noodle band section to swell and change shape, thereby filling the groove 14 and the grooves 16 and 16. Thus, the lengths of the left and right sides which border the tip area of each of the groove 14 and the grooves 16 and 16 are preferably substantially the same. With the lengths of the left and right sides of the groove 14 and the grooves 16 and 16 made substantially the same, when the groove 14 and the grooves 16 and 16 become filled, significant unevenness does not occur on the outer periphery of the cross-section 12, making it is possible to achieve a favorable appearance, taste, and texture of the noodle 10. In the noodle 10 of FIG. 1, the lengths of the left and right sides of the groove 14 are substantially the same. While the lengths of the left and right sides of the groove 16 slightly differ, the difference is of a level that substantially does not result in unevenness when the grooves are filled.

In the cross-section 12, the ratio of the width of the groove section with respect to the thickness of the noodle band section is preferably 1.0 : 0.7 to 1.3. Specifically, with reference to FIG. 1, the ratio between the thickness A3 of the noodle band section adjacent to the groove 14 and a width W11 of the opening area of the groove 14 is preferably 1.0 : 0.7 to 1.3 (the opening width W11 is preferably 0.7 to 1.3 times the thickness). Further, the ratio between at least one of the thicknesses A1 and A3 of the noodle band section adjacent to the groove 16 and a width W12 of the opening area of the groove 16 is preferably 1.0 : 0.7 to 1.3 (the opening width W12 is preferably 0.7 to 1.3 times the thickness). The opening width is made to be at least 0.7 times the thickness of the noodle band section since a width of less than 0.7 times results in a lesser boiling time reduction effect, and the opening width is made to be at most 1.3 times the thickness of the noodle band section since a width exceeding 1.3 times may cause the grooves to not completely close after boiling. In other words, with the above range, the boiling time reduction effect is increased and the grooves of the noodle after boiling almost fully close.

The angle P11 of the tip area of the groove 14 and the angle P12 of the tip area of the grooves 16 are preferably 20 degrees to 45 degrees. The angle P11 and the angle P12 are made to be at least 20 degrees since an angle less than 20 degrees results in a lesser boiling time reduction effect, and are made to be at most 45 degrees since an angle exceeding 45 degrees may excessively increase the widths of the groove 14 and the grooves 16 and 16, causing the grooves to not completely close after boiling.
Note that the tip areas and the acute angle section of the opening end area of the groove 14 and the grooves 16 and 16 may be rounded.

In the cross-section 12 of such the noodle 10, the groove 14 and the grooves 16 and 16 are set so that the total area thereof amounts to 20 to 50%, preferably 30 to 50%, of the area of the circle having the diameter X1 formed by the major outer shape of the cross-section 12, that is, of the area of the virtual cross-section of a case where grooves are not formed. The area of the cross-section of the grooves is made to be at least 20% of the area of the major outer shape (the area of the virtual cross-section) since such an area makes it possible to shorten the boiling time of the noodle 12 further than a non-grooved noodle, and is made to be at least 30% of the area of the major outer shape since such an area makes it possible to clearly shorten the boiling time of the noodle 12 further than a non-grooved noodle and to execute cooking in a short period of time in a microwave oven, for example. Further, the area of the cross-section of the grooves is made to be at most 50% of the area of the major outer shape since such an area makes it possible to maintain the strength and achieve stable production of the noodle 12. Within the above range, the total cross-sectional area of the groove 14 and the grooves 16 and 16 is preferably 35 to 45%, in particular. Given this range, a favorable balance between production stability and a shortened boiling time is achieved.

Furthermore, in the noodle 10 of FIG. 1, as a preferred embodiment, one section of the noodle band between the two grooves 16 and 16 is cut out. When a cut-out section is provided in the noodle band in this manner, a shape where the cut-out section is removed from the area of the circle having the diameter X1 formed by the major outer shape of the cross-section 12 may be regarded as the virtual cross-section of a non-grooved noodle, and the total area of the groove 14 and the grooves 16 and 16 with respect to the area of that virtual cross-section is best set to 30 to 50%. That is, the outer periphery shape that does not have any recesses toward the inside of the noodle band may be assumed as the outer shape that provides a "virtual cross-section of a non-grooved noodle," and a section that is recessed from the outer shape toward the inside may be identified as a groove.

Further, in the cross-section 12, the thickness A1 between the groove 16 and the outer periphery of the cross-section 12, the thickness A2 between the tip of the groove 16 and the outer periphery of the cross-section 12, the thickness A3 between the groove 16 and the groove 14, and the thickness A4 between the tip of the groove 14 and the outer periphery of the cross-section 12 are all preferably within the range 0.3 mm to 0.8 mm. The thickness of the noodle band section in the cross-section of the noodle band is preferably made to be at least 0.3 mm since such a thickness achieves an appropriate texture and makes it possible to maintain the strength and stable production of the noodle 12. The thickness of the noodle band section of the cross-section of the noodle band is preferably made to be at most 0.8 mm since such a thickness clearly shortens the boiling time further than that of a non-grooved noodle and makes it possible to execute cooking within a short period of time using a microwave oven. Further, within the above range, the thickness of each area of the cross-section 12 is preferably 0.5 mm to 0.6 mm, in particular. Given this range, a favorable balance between production stability and a shortened boiling time is achieved.

Here, the thickness of the noodle band section in the cross-section of the noodle band refers to the thickness of the main section that serves as the framework for noodle strength from a production standpoint, and does not include the end area of the cross-sectional shape of the noodle band that occurs as a result of the provision of grooves. That is, while a thickness of 0.3 mm or higher is required in the main area (center area) of the noodle that serves as the framework for noodle strength from a production standpoint, the end area in the cross-sectional shape of the noodle band may be 0.3 mm or less since the area does not significantly affect noodle strength from a production standpoint.
In other words, in the cross-sectional shape of the noodle band, the section that significantly affects noodle strength from a production standpoint, that is, for example, the section comprising approximately 80% of the compositional area from the center, is referred to as the main area, and it is very important to set the thickness of this main area to 0.3 mm to 0.8 mm. However, in an end area outside this main area, that is, for example, an end area having a compositional area of approximately 20% (approximately 10% on one side), a thickness that is not within the above range is unproblematic.

The thickness of the noodle band section refers to the following: in a section where there is a line on either side, such as A3 in the cross-section 12 of the noodle 10, to the distance between two lines; in a section where one outer edge is a line and the other outer edge is a curve or bend point, such as A1 and A4, to the length of the vertical line from the curve or bend point to the line; and in a case where one outer edge is a curve and the other outer edge is a bend point, such as A2, to the minimum value of the distances. As another method, the thickness of the noodle band section may be defined as the length within the cross-section of the line orthogonal to the centerline of the cross-sectional shape, that is, to the line that connects the center points of the two outer edges facing each other.

The difference between the thicknesses of the noodle band section, that is, the thicknesses of each area of the cross-section 12 indicated by A1 to A4, is preferably small. This is because a substantially uniform thickness of each area of the noodle 10 results in a homogenous boiling state.

The noodle 10 having the cross-sectional shape such as described above has a significantly shortened boiling time since the overall thickness of the cross-section 12 is minimal. For example, with a dry spaghetti noodle having a diameter equivalent to 1.5 mm to 1.7 mm, the boiling time of the noodle 10 of the present invention having the cross-section 12 can be reduced from the 5 to 8 minutes of a non-grooved noodle to about 1 to 3 minutes. In cooked using a microwave oven, this noodle 10 is edible after 3 to 5 minutes by using an amount of water equivalent to approximately twice the noodle weight.
Further, the noodle 10 has an overall thickness in the cross-section 12 that is substantially uniform and with minimal change, making it possible to boil the entire noodle to an equal hardness and achieve a favorable taste and texture.
Furthermore, the groove 14 and the grooves 16 and 16 formed on the noodle 10 fully close without any significant unevenness in the closed sections when boiled, making it possible to achieve a favorable appearance.

Note that while in the embodiment of FIG. 1 the groove 14 and the grooves 16 and 16 each substantially form a V-shape, the groove 14 and the grooves 16 and 16 may each form a U-shape in which the left and right sides bordering the tip area are parallel or substantially parallel. Even in a case where each groove forms a U-shape, the same effect as that in the above-described example can be achieved by designing the cross-section of the noodles in the same manner as with the above-described case of the V-shape, excluding non-application of the angle conditions of the tip area.

FIG. 2 shows the general shape of the cross-section (transverse section) orthogonal to the vertical direction (longitudinal direction) of a single noodle band of a noodle 20 of embodiment 2 of the grooved noodles according to the present invention.
In the noodle 20 shown in FIG. 2, a cross-section 22 thereof has a shape wherein one U-shaped groove 24 is provided from an upper side and, on each side of the groove 24, two U-shaped grooves 26 and 26 are provided from a lower side of an ellipse having a long axis X2 and a short axis Y2. The major outer shape of the cross-section 22 is an ellipse having the long axis X2 and the short axis Y2, and the maximum diameter X2 of the cross-section 22 is 1.2 mm to 3.0 mm.
The noodle 20 absorbs water when boiled, causing the noodle band section to swell and change shape, thereby filling the groove 24 and the grooves 26 and 26 so as to make the cross-section become substantially circular in shape prior to eating.

The groove 24 and the grooves 26 and 26 differ from the groove 14 and the grooves 16 and 16 of the noodle 10 of FIG. 1 in terms of the U-shape, but the arrangement is the same as the arrangement of the groove 14 and the grooves 16 and 16 of the noodle 10 of FIG. 1, and depths T21 and T22 and an opening width W2 satisfy the preferred conditions of the depths T11 and T12 and the opening widths W11 and W12 described for the noodle 10 of FIG. 1. Further, the lengths of both sides of the groove 24 and the groove 26 are respectively substantially the same. In the noodle 20, the depth T22 of the groove 26 has a length from the tip of the groove 26 to the center of the opening area. As a preferred form, thicknesses B1 to B6 of each area in the main area of the cross-section 22 are within the range 0.3 mm to 0.8 mm.
In the cross-section 22 of the noodle 20, the groove 24 and the grooves 26 and 26 are set so that the total area thereof amounts to 20 to 50%, preferably 30 to 50%, of the area of the ellipse formed by the major outer shape of the cross-section 22, that is, of the area of the virtual cross-section when grooves are not formed.

When the percentage of the cross-section 22 occupied by the groove 24 and the grooves 26 and 26 is within the above-described range and the thickness B1 to B6 of each area are within the range of 0.3 mm to 0.8 mm, such the noodle 20, similar to the above-described noodle 10, is capable of maintaining the noodle strength required for stable production during production and significantly reducing the boiling time during cooking. Further, the above-described shape of the grooves makes it possible to achieve a favorable appearance, taste, and texture.

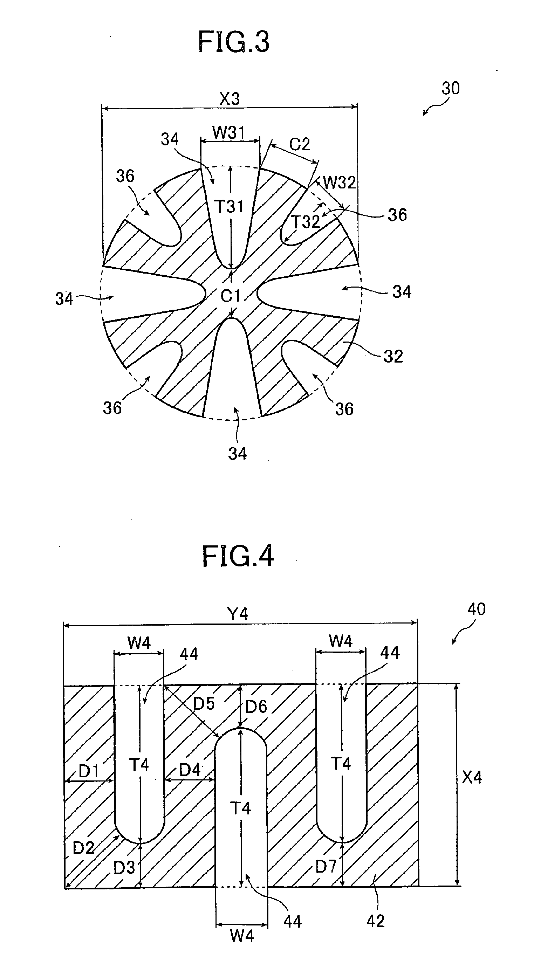

FIG. 3 shows the general shape of the cross-section orthogonal to the longitudinal direction of the noodle band of a noodle 30 of an illustrative example of a first grooved noodle not falling under the scope of the claims.
In the noodle 30 shown in FIG. 3, a cross-section 32 thereof has a shape wherein eight V-shaped grooves 34 and 36 are provided from eight directions toward the center of the cross-section 32 to a circle having a diameter X3. The major outer shape of the cross-section 32 is a circle having the diameter X3, and the diameter X3 is 1.2 mm to 3.0 mm. Note that the grooves may be U-shaped as well.

Four of the grooves 34 having a depth T31 are formed at an interval of 90 degrees, and four of the grooves 36 having a depth T32 are formed between the grooves 34 at an interval of 90 degrees. Each of the four grooves 34 and the four grooves 36 is disposed so that the center of the groove is positioned on a 45-degree interval line that passes through the center of the cross-section 32. The center angles of the groove 34 and the groove 36 may be the same or different.
Each of the depth T31 of the groove 34 and the depth T32 of the groove 36 is smaller than one-half of the diameter X3 of the cross-section 32, while the total of the depths of the opposing two grooves 34 and 34 or the total of the depths of the opposing two grooves 36 and 36 is greater than one-half of the diameter X3 of the cross-section 32. Further, the thickness of the main area that includes thicknesses C1 of the center section and C2 of the outer peripheral section is within the range of 0.3 mm to 0.8 mm.

In the cross-section 32 of the noodle 30, the grooves 34 and the grooves 36 are set so that the total area thereof amounts to 20 to 50%, preferably 30 to 50%, of the area of the circle formed by the major outer shape of the cross-section 32, that is, of the area of the virtual cross-section when grooves are not formed.
Each of an opening width W31 of the groove 34 and an opening width W32 of the groove 36 is within the range of 0.7 to 1.3 times that of the thickness C2 of the adjacent noodle band. The lengths of both sides of the groove 34 and the groove 36 are respectively substantially the same.

The noodle 30 absorbs water when boiled, causing the noodle band section to swell and change shape, thereby filling the grooves 34 and the grooves 36 and making the cross-section become substantially circular in shape prior to eating. When the percentage of the cross-section 32 occupied by the grooves 34 and the grooves 36 is within the above-described range and the thicknesses C1 and C2 of each area are within the range of 0.3 mm to 0.8 mm, such the noodle 30, similar to the above-described noodle 10, is capable of maintaining the noodle strength required for stable production during production and significantly reducing the boiling time during cooking. Further, the above-described shape of the grooves makes it possible to achieve a favorable appearance, taste, and texture.

As an example of a modification of FIG. 3, each of the four grooves 34 and the four grooves 36 may be arranged so that the sides of each groove are positioned on 16 lines of a predetermined interval that pass through the center of the cross-section 32.

FIG. 4 shows the general shape of the cross-section (transverse section) orthogonal to the vertical direction (longitudinal direction) of a single noodle band of a noodle 40 of an illustrative example of a second grooved noodle falling under the scope of the claims.
In the noodle 40 shown in FIG. 4, a cross-section 42 has a rectangular shape having a short side X4 and a long side Y4, and comprises a total of three U-shaped grooves 44 alternately formed from the two long sides toward the inside of the noodle band. In the example of FIG. 4, one of the grooves 44 is formed from the lower side and, on both sides of that groove 44, two of the grooves 44 are formed from the upper side. The three grooves 44 extend in the noodle band direction of the noodle 40. The three grooves 44 have substantially identical shapes and are disposed substantially parallel to the short side of the cross-section 42. In the example of FIG. 4, the grooves 44 are symmetrically disposed with respect to a line that runs through the center of the long side Y4.
The noodle 40 absorbs water when boiled, causing the noodle band section to swell and change shape, filling the grooves 44 and making the cross-section change to a non-grooved rectangular shape (including a square) prior to eating.

In the cross-section 42 of the noodle 40, the plurality of grooves 44 are set so that the area thereof amounts to 20 to 50% of the area of the rectangular shape having the short side X4 and the long side Y4, that is, of the area of the virtual cross-section when grooves are not formed in the noodle 40. The same holds true for both a case where there are two grooves 44 and a case where there are four or more grooves 44.
The area of the cross-section of the grooves is made to be at least 20% of the area of the rectangular shape of the cross-section since such an area clearly reduces the boiling time of the noodle 40 further than that of a non-grooved noodle and enables cooking in a short period of time in a microwave oven, for example. Further, the area of the cross-section of the grooves is made to be at most 50% of the area of the major outer shape since such an area makes it possible to maintain the strength and achieve stable production of the noodle 40. Within the above range, the total area of cross-section of the grooves 44 is preferably 30 to 45%, in particular. Given this range, a favorable balance between production stability and a shortened boiling time is achieved.

In a case where the short side X4 of the noodle 40 is 1.0 mm to 2.0 mm and the long side Y4 of the noodle 40 is 2.0 mm to 6.0 mm, the thickness of the cross-section 42 of the noodle band is preferably within the range of 0.3 mm to 0.8 mm. That is, specifically, using the left half of the cross-section 42 in FIG. 4 as a representation, thicknesses D1 to D3, D5, and D6 between the groove 44 and the outer surface of the noodle 40, and a thickness D4 between the two grooves 44 are each preferably within the range 0.3 mm to 0.8 mm.

The reason a thickness of at least 0.3 mm is preferred for the noodle band section in the cross-section of the noodle band is as described in the aforementioned embodiment 1. Further, within the above range, the thickness of each area of the cross-section 42 is preferably 0.5 mm to 0.6 mm, in particular, similar to the aforementioned embodiment 1.

The thickness of the noodle band section refers to the following: in a section where there is a line on either side, such as D1 and D4 in the cross-section 42 of the noodle 40, to the distance between the two lines; in a section where one outer edge is a line and the other outer edge is a curve or bend point, such as D3 and D6, to the length of the vertical line from the curve or bend point to the line; and in a case where one outer edge is a curve and the other outer edge is a bend point, such as D3 and D5, to the minimum value of the distances. As another method, the thickness of the noodle band section may be defined as the length within the cross-section of the line orthogonal to the centerline of the cross-sectional shape, that is, to the line that connects the center points of the two outer edges facing each other.

The difference between the thicknesses of the noodle band section, that is, the thicknesses of each area of the cross-section 42 indicated by D1 to D6, is preferably small. This is because a substantially uniform thickness of each area of the noodle 40 results in a homogenous boiling state.

A depth T4 of the groove 44, that is, the length T4 of the vertical line from the tip of the groove 44 to the opening end surface, is preferably greater than one-half of the short side X4. In other words, the groove 44 is preferably formed deeper than the center of the cross-section 42. When the groove 44 is formed deeper than the center of the cross-section 42 in this manner, the thicknesses D3, D6, and D7 of the areas of the noodle band section following the tips of the grooves 44 can be decreased, thereby making it possible to decrease the difference from the thickness of other areas.

As described above, the noodle 40 absorbs water when boiled, causing the noodle band section to swell and change shape, thereby filling the grooves 44. Thus, the lengths of the left and right sides which border the tip area of the groove 44 are preferably substantially the same. With this arrangement, when the grooves 44 are filled, a significant unevenness does not occur at the outer periphery of the cross-section 42, making it possible to achieve a favorable appearance, taste, and texture of the noodle 40.

In the cross-section 42, the ratio of the width of the groove section with respect to the thickness of the noodle band section is preferably 1.0 : 0.7 to 1.3. Specifically, with reference to FIG. 4, the ratio between a thickness D1 or D4 of the noodle band section adjacent to the groove 44 and a width W4 of the opening of the groove 44 is preferably 1.0 : 0.7 to 1.3 (the opening width W4 is preferably 0.7 to 1.3 times the thickness D1 or D4). The opening width is made to be at least 0.7 times the thickness of the noodle band section since a width of less than 0.7 times results in a lesser boiling time reduction effect, and the opening width is made to be at most 1.3 times the thickness of the noodle band section since a width exceeding 1.3 times may cause the grooves to not completely close after boiling. In other words, with the above range, the boiling time reduction effect is increased and the grooves of the noodle after boiling almost fully close.

The noodle 40 having the cross-sectional shape such as described above has a significantly shortened boiling time since the overall thickness of the cross-section 42 is minimal. For example, with a dry noodle-shaped pasta having a short side of 1.8 mm and a long side of 3.0 mm, the boiling time of the noodle 40 of the present invention having the cross-section 42 can be reduced from the 13 to 14 minutes of a non-grooved noodle to about 3 to 4 minutes. In cooked using a microwave oven, this noodle 40 is edible after 5 to 6 minutes by using an amount of water equivalent to approximately twice the noodle weight.
Further, the noodle 40 has an overall thickness in the cross-section 42 that is substantially uniform and with minimal change, making it possible to boil the entire noodle to an equal hardness and achieve a favorable taste and texture.
Furthermore, the grooves 44 formed on the noodle 40 fully close without any significant unevenness in the closed sections when boiled, making it possible to achieve a favorable appearance.

Note that, in the noodle 40 of FIG. 4, the acute angle sections of the opening end areas of the grooves 44 may be rounded. Further, the groove 44 may be formed into a V-shape that widens toward the opening end area and, in such a case, the tip of the V-shape may be rounded. While a plurality of grooves 44 of the same shape are provided in the noodle 40 of FIG. 4, the shape of the grooves provided on one long side may differ from that of the grooves provided on the other long side, or grooves having three or more different shapes may be arranged.
Further, while the cross-section 42 of the noodle 40 is not limited to having a symmetrical shape, arranging the grooves 44 so that the cross-section 42 has an axisymmetrical shape makes it possible to achieve more stable producability as well as a favorable appearance, taste, and texture of the noodle 40.

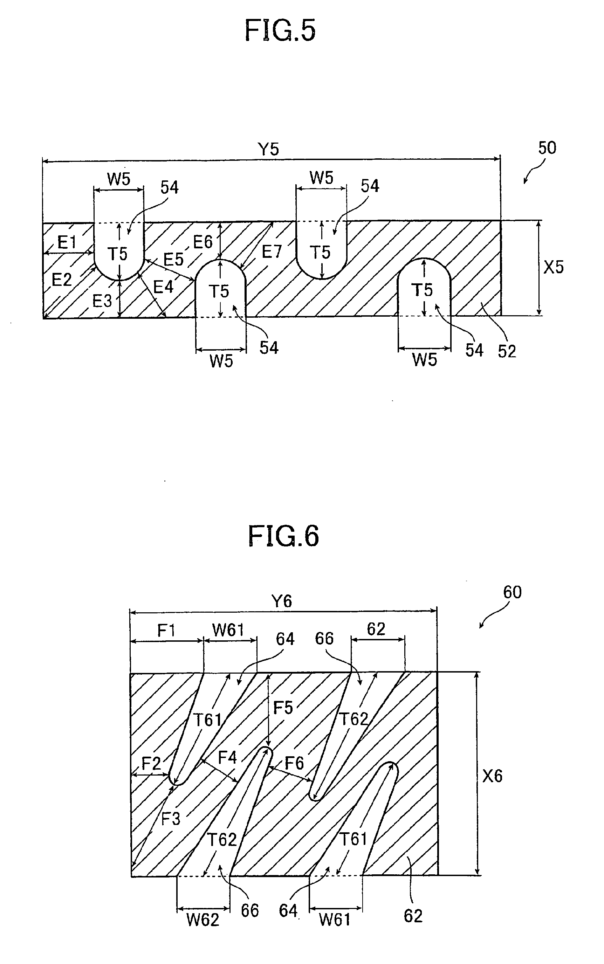

FIG. 5 shows the general shape of the cross-section (transverse section) orthogonal to the vertical direction (longitudinal direction) of a single noodle band of a noodle 50 of an illustrative example of a third grooved noodle not falling under the scope of the claims.
With the noodle 50 shown in FIG. 5, a cross-section 52 thereof has a rectangular shape having a short side X5 and a long side Y5, and comprises a total of four U-shaped grooves 54 formed alternately from the two long sides toward the inside of the noodle band. The grooves 54 extend in the noodle band direction of the noodle 50.

The difference between the short side X5 and the long side Y5 of the rectangular shape of the cross-section 52 of the noodle 50 is larger than that of the noodle 40 of FIG. 4. In such the noodle 50 as well, the grooves 54 are established so that the total area thereof in the cross-section 52 amounts to 20 to 50% of the area of the rectangular shape of the cross-section 52.

Further, for example, given that the noodle 50 comprises the short side X5 of 1.0 mm and the long side Y5 of 4.5 mm in the cross-section 52, as a preferred form, the grooves 54 are formed so that thicknesses E1 to E7 of the main area in the cross-section 52 of the noodle band of the noodle 50 are within the range of 0.3 mm to 0.8 mm. FIG. 5 shows the thicknesses E1 to E7 for the left half in representation of the entire cross-section 52.
Furthermore, a depth T5 and an opening width W5 of the groove 54 satisfy the preferred conditions of the depth T4 and the opening width W4 described for the noodle 40 of FIG. 4. The lengths of both sides of the groove 54 are substantially the same.

When the percentage of the cross-section 52 occupied by the grooves 54 is within the above-described range and the thicknesses E1 to E7 of each area are within the range of 0.3 mm to 0.8 mm, such the noodle 50, similar to the noodle 40 of the aforementioned second illustrative example, is capable of maintaining the noodle strength required for stable production during production and significantly reducing the boiling time during cooking. Further, the above-described shape of the grooves makes it possible to achieve a favorable appearance, taste, and texture.

FIG. 6 shows the general shape of the cross-section orthogonal to the longitudinal direction of the noodle band of a noodle 60 of an illustrative example of a fourth grooved noodle not falling under the scope of the claims.
In the noodle 60 shown in FIG. 6, a cross-section 62 thereof has a rectangular shape having a short side X6 and a long side Y6, and comprises a total of four V-shaped grooves 64 and grooves 66 formed alternately from the top and bottom, with one of each formed from each long side toward the inside of the noodle band. The grooves 64 and 66 extend in the noodle band direction of the noodle 60.

The grooves 64 and the grooves 66 are formed on an incline having an angle from a line parallel to the short side X6. The opposing sides of the neighboring groove 64 and the groove 66 are substantially parallel. A depth T62 of the groove 66 is deeper than a depth T61 of the groove 64, but the tips of both grooves reach a position that is deeper than one-half of the short side X6. While T61 exhibits a length from the tips of the groove 64 and T62 exhibits a length from the tips of the groove 66 to the center of the respective opening areas in FIG. 6, the groove 64 and the groove 66 preferably have depths perpendicular to the long side Y6 (not these lengths T61 and T62) that are greater than one-half of the short side X6.
Further, the groove 66 is formed toward the center of the cross-section 62 while the groove 64 is disposed on the outside thereof, and the cross-section 62 has a shape that is symmetrical with respect to the center point thereof.

In the noodle 60, the grooves 64 and the grooves 66 are established so that the total area thereof in the cross-section 62 amount to 20 to 50% of the area of the rectangular shape of the cross-section 62.
The short side X6 of the noodle 60 is within the range of 1.0 mm to 2.0 mm and the long side Y6 is within the range of 2.0 mm to 6.0 mm, and thus the thickness of the cross-section 62 of the noodle band is preferably within the range of 0.3 mm to 0.8 mm. That is, in the cross-section 62 of the noodle band of the noodle 60, the grooves 64 and the grooves 66 are preferably formed so that thicknesses F1 to F3 between the groove 64 and the outer surface of the noodle 60, thickness F4 between the groove 64 and the groove 66, thickness F5 between the groove 66 and the outer surface of the noodle 60, and thickness F6 between the two grooves 66 and 66 are all within the range of 0.3 mm to 0.8 mm. Furthermore, because the cross-section 62 forms a shape that is symmetrical with respect to the center point of the cross-section 62, in FIG. 6 the thicknesses F1 to F6 are shown using the left half as a representation of the entire cross-section 62.

A width W61 of the opening area of the groove 64 is within the range of 0.7 to 1.3 times the respective or either of the thicknesses F1 and F4 of the adjacent noodle band section, and a width W62 of the opening area of the groove 66 is within the range of 0.7 to 1.3 times the respective or either of the thicknesses F4 and F6 of the adjacent noodle band section.
While the lengths of both sides of the groove, 64 and the groove 66 slightly differ, the difference is of a level that results in virtually no unevenness when the grooves close.

In the cross-section 62 of the noodle 60, the grooves 64 and the grooves 66 are established so that the total area thereof amounts to 20 to 50% of the area of the rectangular shape of the cross-section 62. With this arrangement, it is possible to maintain the noodle strength required for stable production during production and to significantly shorten the boiling time during cooking. Furthermore, the thicknesses F1 to F6 of each area are within the range of 0.3 min to 0.8 mm, thereby obtaining an even greater effect in terms of the point described above. Further, the above-described shape of the grooves makes it possible to achieve a favorable appearance, taste, and texture.

The noodle 60 is formed into a shape having point symmetry, making the noodle 60 superior in terms of a favorable balance of strength in the noodle during production, a favorable boiled shape and, by extension, a favorable taste and a favorable texture.

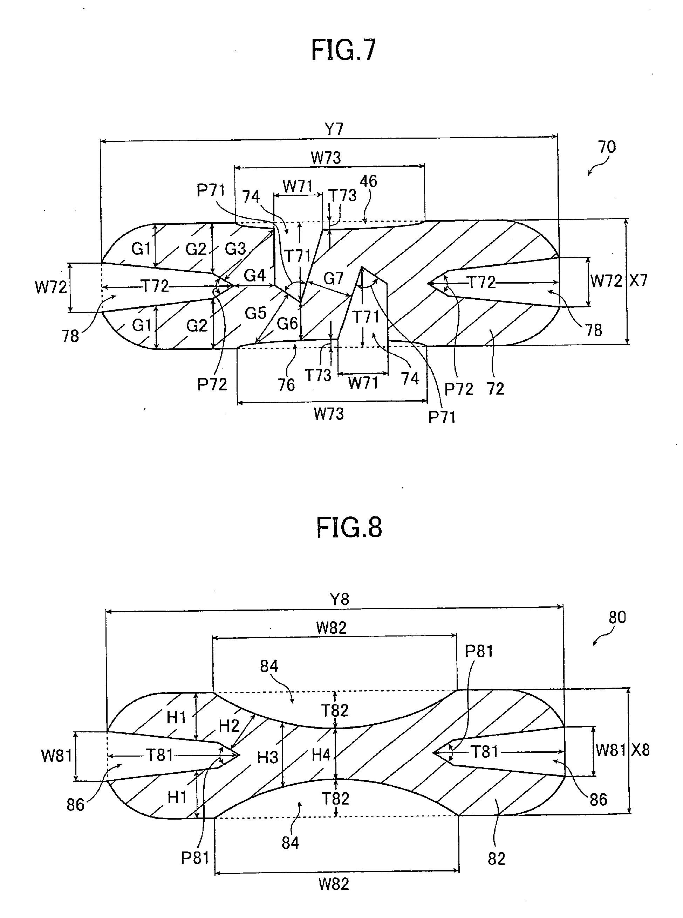

FIG. 7 shows the general shape of the cross-section orthogonal to the longitudinal direction of the noodle band of a noodle 70 of an illustrative example of a fifth grooved noodle falling under the scope of the claims.
In the noodle 70 shown in FIG. 7, a cross-section 72 thereof has a major outer shape that is substantially rectangular, with the four corner areas of the rectangular shape, having a short side X7 and a long side Y7, rounded. In FIG. 7, this major outer shape is indicated by the solid and dashed lines. Near the center of each of the two long sides are respectively formed one deep groove 74 and one shallow groove 76. The two grooves 74 and 74 are alternately formed from the two opposing long sides at shifted positions. The two grooves 76 and 76 are formed in a wide, shallow fashion at substantially the same position in the center area of the two opposing long sides. At the respective center areas of each of the two short sides is formed a groove 78, which extends to a position that retains a predetermined thickness G4 to the groove 74. The cross-section 72 forms a shape that is symmetrical with respect to the center point thereof.

In the cross-section 72, the groove 74 is formed comprising a side inclined to the side away from the center of the cross-section 72, from near the center of the long side of the cross-section 72 toward the inside of the cross-section 72, so as to reach the tip of the groove 74, and a side that is cut orthogonal to the long side into the cross-section 72 from a position further outside than the inclined side (the end side of the long side of the cross-section 72) and bends midway toward the center of the cross-section 72 so as to reach the tip of the groove 74. In the groove 74, the depth orthogonal to the long side of the cross-section 72 is T71, and the opening width is W71. The sides inclined toward the center of the cross-section 72 of the two grooves 74 and 74 provided on the two opposing long sides are substantially parallel, and the thickness therebetween is G7.
The depth T71 of the groove 74 is from the tip thereof to a position deeper than one-half of the short side X7 of the cross-section 72. The width W71 of the opening area of the groove 74 is within the range of 0.7 to 1.3 times the thickness G7 of the adjacent noodle band section.

An angle P71 of the tip of the groove 74 is preferably 20 to 90 degrees. When the angle P71 is set to at least 20 degrees, moisture readily penetrates the inside of the noodle band during boiling. When the angle P71 is set to at most 90 degrees, it is possible for the tip area of the groove 74 to close by the time the noodle 70 is boiled. Although it becomes difficult for the noodle band to close at the opening area in a case where the tip angle is set to 90 degrees or higher and the groove is widened to the opening area as is, when at least one side is bent so as to suppress the opening width, as in the groove 74 of FIG. 7, and the opening width W71 is kept within the range of 0.7 to 1.3 times the thickness G7 of the adjacent noodle band section, moisture readily penetrate and the entire groove 74 closes by the time the noodle 70 boils. While the lengths of both sides of the groove 74 slightly differ, that difference is only of a level at which unevenness substantially does not occur when the groove closes.
The groove 74 may be formed into a shape where the side toward the center of the cross-section 72 is orthogonal to the long side of the cross-section 72, and the side on the outside is on an incline.

The groove 78 is a substantially V-shaped groove formed from the center area of the short side of the cross-section 72 toward the inside of the cross-section 72, and the depth thereof is T72 and the opening width thereof is W72. The two sides of the groove 78 in the cross-section 72 are bent in the middle, have a small inclination angle with respect to the line orthogonal to the short side of the cross-section 72 on the opening area side, and have a large such inclination angle at the tip section of the groove 78. With the groove 78 as well, similar to the groove 74, a tip angle P72 is made to be at least 20 degrees so that the moisture readily penetrates into the inside of the noodle band during boiling. Further, with both sides of the groove 78 bent so as to suppress the opening width on the opening area side, and the opening width W72 set to within the range of 0.7 to 1.3 times a thickness G1 of the adjacent noodle band section, the ease of moisture penetration is maintained and the entire groove 78 closes by the time the noodle 70 is boiled. The lengths of both sides of the groove 78 are substantially the same, and substantially no unevenness occurs when the groove closes.

The groove 76 is formed by cutting out the center section of the corresponding long side of the cross-section 72 into an elliptical shape, and has a depth T73 and a width W73. In the illustrative example of FIG. 7, the groove 76 is elliptical in shape, having the long axis W73 and the short axis T73. The depth T73 of the groove 76 is approximately 5 to 15% of the short side length X7 of the cross-section 72, and approximately 10 to 30% when the two grooves 76 are combined, and the groove 76 is an extremely shall groove (recessed area). The opening width W73 of the groove 76 is approximately 40% of the long side length Y7 of the cross-section 72, and the positions of both end areas of the groove 76 substantially match the positions of the peaks of the two grooves 78 formed from the two short sides toward the center of the cross-section 72. That is, the groove 76 is mainly disposed across the region where the groove 78 is not provided, in the direction parallel to the long side of the cross-section 72.

In the noodle 70, the grooves 74, the grooves 76, and the grooves 78 are established so that the total area thereof in the cross-section 72 amounts to 20 to 50% of the area of the major outer shape of the substantially rectangular shape of the cross-section 72.
The short side X7 of the noodle 70 is within the range of 1.0 mm to 2.0 mm and the long side Y7 of the noodle 70 is within the range of 2.0 mm to 6.0 mm, and thus the thickness of the cross-section 72 of the noodle band is preferably within the range of 0.3 mm to 0.8 mm. That is, in the cross-section 72 of the noodle band of the noodle 70 shown in FIG. 7, the grooves 74, the grooves 76, and the grooves 78 are preferably formed so that the thicknesses G1 and G2 between the groove 78 and the outer surface of the noodle 70, a thickness G3 between the groove 78 and the groove 76, the thickness G4 between the groove 78 and the groove 74, thicknesses G5 and G6 between the groove 74 and the opposing groove 76, and the thickness G7 between the two grooves 74 and 74 are all within the range of 0.3 mm to 0.8 mm. Furthermore, because the cross-section 72 forms a shape that is symmetrical with respect to the center point of the cross-section 72, in FIG. 7 the thicknesses G1 to G7 are shown using the left half as a representation of the entire cross-section 72.

The noodle 70, in addition to the groove 74 provided on the long side of the cross-section 72, has the groove 78 provided on the short side. The noodle 70 swells in both the long-side direction and the short-side direction when boiled, and therefore, as in the noodle 70 of FIG. 7, is provided with a combination of long side grooves and short side grooves, utilizing the swelling toward each direction of the noodle 70 to make the cross-sectional shape of the noodle 70 after boiling into a substantially rectangular shape with all the grooves nicely closed. Further, in a case where the aspect ratio of the cross-section 72 results in a large shape, in comparison to a case where a large number of grooves are provided on the long side only, providing grooves on the short side as well makes it possible to set the thickness of the cross-section 72 within a predetermined range with a small number of grooves, and further improve production stability, noodle strength, and the boiled shape, taste, and texture.

The noodle 70 has the wide, shallow groove 76 on the long side of the cross-section 72. Providing this groove 76 makes it possible to reduce the thickness G3 between the tip of the groove 78 and the outer surface (the groove 76) of the cross-section 72.

FIG. 8 shows the general shape of the cross-section orthogonal to the longitudinal direction of the noodle band of a noodle 80 of an illustrative example of a sixth grooved noodle not falling under the scope of the claims.
The noodle 80 shown in FIG. 8 has the same major outer shape of a cross-section 82 thereof as the major outer shape of the cross-section 72 of the noodle 70 of FIG. 7. That is, the cross-section 82 has a major outer shape having four corner areas of a rectangular shape comprising a short side X8 equivalent to X7 and a long side Y8 equivalent to Y7 that are rounded. In FIG. 8, this major outer shape is indicated by the solid and dashed lines. In the cross section 82, a groove 84 is formed in the center area of each of the two opposing long sides. In addition, a groove 86 is formed in the center area of each of the two short sides. The cross-section 82 has a shape that is symmetrical with respect to the center point of the cross-section 82, and symmetrical with respect to both the line parallel to the short side and the line parallel to the long side that run through the center.

The groove 86 has the same shape as the groove 78 of the noodle 70 of FIG. 7. That is, the groove 86 is a substantially V-shaped groove formed from the center area of the short side of the cross-section 82 toward the inside of the cross-section 82, with the two sides bent in the middle. A tip angle P81, an opening width W81, and a depth T81 of the groove 82 are respectively the same as the tip angle P72, the opening width W72, and the depth T72 of the groove 78 of the noodle 70 of FIG. 7.

The groove 84 is formed by cutting out the center section of the corresponding long side of the cross-section 82 into an arc shape, and has a depth T82 and an opening width W82. The depth T82 of the groove 84 is approximately 25 to 35% of the short side length X8 of the cross-section 82, and approximately 50 to 70% when the two grooves 84 are combined. The opening width W82 of the groove 84 is approximately 50% of the long side length Y8 of the cross-section 82, and both end areas of the groove 84 substantially match the bend points of the tip sections of the two grooves 86 formed from the two short sides toward the center of the cross-section 82. The groove 84 is provided so that the curve of the arc follows along the inclination angle of the tip section of the groove 86, and forms a substantially parallel thickness section (a thickness H2) between the groove 84 and the groove 86.

In the noodle 80 as well, the grooves 84 and the grooves 86 are established so that the total area thereof in the cross-section 82 amounts to 20 to 50% of the area of the major outer shape of the substantially rectangular shape of the cross-section 82.
The short side X8 of the noodle 80 is within the range of 1.0 mm to 2.0 mm and the long side Y8 of the noodle 80 is within the range of 2.0 mm to 6.0 mm, and thus the thickness of the cross-section 82 of the noodle band is preferably within the range of 0.3 mm to 0.8 mm. That is, in the cross-section 82 of the noodle band of the noodle 80 shown in FIG. 8, the groove 84 and the groove 86 are preferably formed so that a thickness H1 between the groove 86 and the outer surface of the noodle 80, the thickness H2 between the groove 86 and the groove 84, and thicknesses H3 and H4 between the two grooves 84 and 84 are all within the range 0.3 mm to 0.8 mm. Furthermore, the cross-section 82 has a shape that is symmetrical with respect to the center point of the cross-section 82 or with respect to a line parallel to the short side that passes through the center of the cross-section 82 and, in FIG. 8, the thicknesses H1 to H4 are shown for the left half as a representation of the entire cross-section 82.

On the long side of the cross-section 82, the noodle 80 is provided with the groove 84, which is a wide, arc-shaped concave area, rather than a narrow, deep groove. In a case where such a shape is formed as well, it is possible to make the cross-sectional shape of the noodle 80 after boiling into a neat rectangular shape. Further, the mold for the noodle 80 is relatively easy to manufacture, thereby increasing the production stability of the noodle 80 as well. Further, similar to the above-described noodle 70 of FIG. 7, the noodle 80 of this illustrative example is also particularly suitable to a case where the cross-section 82 has a large aspect ratio, making it possible to set the thickness of the cross-section 82 to within a predetermined range with a small number of grooves, and further improve noodle strength and the boiled shape, taste, and texture.

While illustrative scenarios in which three, four, or eight grooves were formed in the noodle band direction have been described in the above embodiments, the number of grooves in the present invention may be any number greater than or equal to two. Regardless of the number of grooves, the total area of the groove section in the cross-section of the noodle band amounts to 20 to 50%, more preferably 30 to 50%, of the area of the major outer shape of the noodle band, making it possible to obtain noodles having a significantly shortened boiling time than that of non-grooved noodles and are still comparable to non-grooved noodles in appearance, taste, and texture after cooking.

FIG. 9 shows the general shape of the cross-section (transverse section) orthogonal to the vertical direction (longitudinal direction) of a single noodle band of a noodle 90 of embodiment 3 of the grooved noodles according to the present invention.
The noodle 90 shown in FIG. 9 has a shape having a cross-section 92 wherein a circle of a diameter X9 is equally cut on the left and right at lines parallel to a width Y9 so as to cut out the outer sections beyond the width Y9, and is provided with V-shaped grooves 94a and 94b from the left side in the upper area and from the right side in the lower area. The cross-section 92 has a maximum diameter equivalent to the diameter X9, and the major outer shape thereof is an arc of the diameter X9. The diameter X9 is 1.2 mm to 3.0 mm. The parallel width Y9 for cutting is preferably a width where at least one-half of the arc of the diameter X9 remains so that the boiled cross-section of the noodle 90 is substantially circular in shape.

The two grooves 94a and 94b are disposed at positions that result in symmetry with respect to the center point of the cross-section 92, with the adjacent sides thereof parallel. In FIG. 9, J4 indicates the thickness of the noodle band section between the two grooves 94 and 94. The thickness J4 of the parallel area between the grooves 94 and 94 is constant. The thickness J4 is set to within a range of 0.3 mm to 0.8 mm.
While the groove 94 and the groove 94 may be arranged so that the adjacent sides thereof are not parallel when the thickness J4 is within the range of 0.3 mm to 0.8 mm, a form wherein the groove 94 and the groove 94 are arranged so that the adjacent sides thereof are parallel is preferred since such an arrangement results in a constant thickness J4. In a case where the thickness J4 is not constant, the change in thickness is preferably small.

Each of the grooves 94a and 94b is formed deeper than the center of the cross-section 92. In FIG. 9, J3 indicates the thickness of the noodle band section between the tip of the groove 94a and the cut-out surface based on the lines of the width Y9. Since the groove 94a and the groove 94b have point symmetry, the thickness of the noodle band section at the tip of the groove 94b is the same J3. A depth T9 of the grooves 94a and 94b, that is, the length T9 of the perpendicular line from the tip of the groove to the opening end surface, is preferably greater than one-half of the width Y9, which is the diameter in the formation direction of the grooves 94a and 94b of the cross-section 92. With this arrangement, the thickness J3 can be minimized, and the thickness values between the arc of the cross-section 92 and the side on the arc side of the grooves 94a and 94b indicated by J1 and J2 in FIG. 9 can be minimized. The thickness J3 is set to within a range of 0.3 mm to 0.8 mm.

The tip areas of the grooves 94a and 94b have an angle P9, and the sides on the arc side are bent to obtuse angles in the middle. The thickness J2 between the side on the tip area side and the arc, and the thickness J1 at the bend are both set to within the range of 0.3 mm to 0.8 mm.
If it is possible to set the thickness from the tip area to the opening area of each of the grooves 94a and 94b, which include the thickness J1 and the thickness J2, to within the range of 0.3 mm to 0.8 mm, the sides on the arc side of the grooves 94a and 94b do not need to be bent. However, as in FIG. 9, a shape where the sides on the arc side of each of the grooves 94a and 94b are bent to an obtuse angle in the middle is preferred since such a shape makes it possible to minimize the change in thickness from the tip area to the opening area of each of the grooves 94a and 94b. Further, the sides on the arc side of the grooves 94a and 94b may be bent at two or more locations.

As described above, the thicknesses of each area of the cross-section 92 indicated by J1 to J4 are within the range of 0.3 mm to 0.8 mm. Here, the thickness of the noodle band section in the cross-section of the noodle band is made to be at least 0.3 mm since a thickness of less than 0.3 mm results in a weak texture or difficulties in producing the noodle 90 due to low strength. On the other hand, the thickness of the noodle band section in the cross-section of the noodle band is made to be at most 0.8 mm since a thickness that exceeds 0.8 mm results in a longer boiling time and difficulties in cooking in a microwave oven within a short period of time. Further, within the above range, the thickness of each area of the cross-section 92 is preferably 0.5 mm to 0.6 mm, in particular. With this range, the balance between production stability and a shortened boiling time is most appropriate.

The thickness of the noodle band section in the cross-section of the noodle band, as described above, refers to the thickness of the main section that serves as the framework for noodle strength from a production standpoint, and does not include the end area in the cross-sectional shape of the noodle band that occurs as a result of the provision of grooves. That is, while a thickness of 0.3 mm or higher is required in the main area (center area) of the noodle that serves as the framework for noodle strength from a production standpoint, the end area in the cross-sectional shape of the noodle band may be 0.3 mm or less since the area does not significantly affect noodle strength from a production standpoint.
In other words, in the cross-sectional shape of the noodle band, the section that significantly affects noodle strength from a production standpoint, that is, for example, the section comprising approximately 80% of the compositional area from the center, is referred to as the main area, and it is very important to set the thickness in this main area to 0.3 mm to 0.8 mm. However, in the end area outside this main area, that is, for example, the end area having a compositional area of approximately 20% (approximately 10% on one side), a thickness not within the above-described range is acceptable.

The thickness of the noodle band section refers to the following: in a section where there is a line on either side, such as J4 in the cross-section 92 of the noodle 90, to the distance between the two lines; in a section where one outer edge is a line and the other outer edge is a curve or bend point, such as J2 and J3, to the length of the vertical line from the curve or bend point to the line; and in a case where one outer edge is a curve and the other outer edge is a bend point, such as J1, to the minimum value of the distances.
As another method, the thickness of the noodle band section may be defined as the length within the cross-section of the line orthogonal to the centerline of the cross-sectional shape, that is, to the line that connects the center points of the two outer edges facing each other.

The difference between the thicknesses of the noodle band section, that is, the thickness of each area of the cross-section 92 indicated by J1 to J4, is preferably small. This is because a substantially uniform thickness of each area of the noodle 90 results in a homogenous boiling state.

The noodle 90 absorbs water when boiled, causing the noodle band section to swell and change shape, thereby filling the grooves 94a and 94b. Thus, the lengths of the left and right sides which border the tip areas of the grooves 94a and the grooves 94b are preferably substantially the same. With the lengths of the left and right sides of the grooves 94a and 94b made substantially the same, when the grooves 94a and 94b become filled, a great amount of unevenness does not occur on the outer periphery of the cross-section 92, making it is possible to achieve a favorable appearance, taste, and texture of the noodle 90.

Further, the grooves 94a and 94b are provided symmetrically with respect to the center point of the cross-section 92 so that the cross-section 92 has a shape with point symmetry, thereby making it possible to achieve stable producability, a substantially circular or substantially elliptical cross-sectional shape of the boiled noodle, and a favorable outer appearance, taste, and texture of the noodle 90.

Further, the angle P9 of the tip areas of the grooves 94a and 94b is preferably 20 degrees to 70 degrees. The angle P9 is made to be at least 20 degrees since an angle less than 20 degrees results in a lesser boiling time reduction effect, and at most 70 degrees since an angle exceeding 70 degrees may excessively increase the widths of the grooves 94a and 94b, causing the grooves to not completely close after boiling. Note that the tip areas of the grooves 94a and 94b may be rounded.

In the cross-section 92, the ratio of the width of the groove section with respect to the thickness of the noodle band section is preferably 1.0 : 0.5 to 2.0. Specifically, with reference to FIG. 9, the ratio between at least one of the thicknesses of the noodle band section on either side of the groove 94a, such as J4 for example, adjacent to the groove 94a, and the width W9 of the opening area of the groove 94a is preferably 1.0 : 0.5 to 2.0 (the opening width W9 is preferably 0.5 to 2.0 times the thickness J4). Here, the opening width is made to be at least 0.5 times the thickness of the noodle band section since a width of less than 0.5 times results in a lesser boiling time reduction effect, and the opening width is made to be at most 2.0 times the thickness of the noodle band section since a width exceeding 2.0 times may cause the grooves to not completely close after boiling.

The noodle 90 having a cross-sectional shape such as described above has a significantly shortened boiling time since the overall thickness of the cross-section 92 is minimal. For example, with a dry spaghetti noodle having a diameter equivalent to 1.5 mm to 1.7 mm, the boiling time of the noodle 90 of the present invention having the cross-section 92 can be reduced from the 5 to 8 minutes of a non-grooved noodle to about 1 to 3 minutes. In cooked using a microwave oven, this noodle 90 is edible after 3 to 5 minutes by using an amount of water equivalent to approximately twice the noodle weight.
Further, the noodle 90 has an overall thickness in the cross-section 92 that is substantially uniform and with minimal change, making it possible to boil the entire noodle to an equal hardness and achieve a favorable taste and texture.
Furthermore, the grooves 94a and 94b formed on the noodle 90 fully close without any significant unevenness in the closed sections when boiled, making it possible to achieve a favorable appearance.

Note that while in the example of FIG. 9 the grooves 94a and 94b each substantially form a V-shape, the grooves 94a and 94b may form a U-shape in which the left and right sides bordering the tip area are parallel or substantially parallel. Even in a case where each groove forms a U-shape, the same effect as that in the above-described example can be achieved by designing the cross-section of the noodles in the same manner as in the above-described case of the V-shape, excluding non-application of the angle conditions of the tip area.
Further, while the major outer shape of the cross-section of the noodle 90 formed an arc of a circle in the example of FIG. 9, the major outer shape of the cross-section of the noodle band may form an arc of an ellipse.

In the above embodiment 3, two grooves are formed and these two grooves are provided symmetrically with respect to a point in the cross-section, resulting in a cross-sectional shape having point symmetry. Such a form is preferred since the strength balance of the noodle during production is favorable, and a favorable boiled shape and, by extension, a favorable taste and texture are achieved. However, as another example of this embodiment, three or more grooves may be provided, similar to each of the aforementioned embodiments. In a case where three or more grooves are provided, the grooves are best provided alternately from positions in the cross-section that face each other, and the dimensions of the grooves and the dimensions of the thickness of each section are best set so as to satisfy the aforementioned conditions. At this time, the cross-sectional shape is preferably symmetrical with respect to a point or a line.

The present invention is applicable to various noodles, such as raw noodles, boiled noodles, steamed noodles, dry noodles, or instant noodles. Among these, dry noodles require a long boiling time compared to raw noodles, etc., resulting in the achievement of a higher shortened boiling time effect when the present invention is applied.
Further, the present invention may be applied to noodles obtained using a variety of methods, such as a method of stretching, a method of cutting after rolling, a method of extrusion, etc. Particularly, extrusion is preferred from the standpoint of ease of applicability since the shape of the extrusion die is made to correspond to the shape of the cross-section of the noodle band, making it possible to simultaneously perform noodle production and groove formation. In the case of the method of stretching and the method of cutting after rolling, a separate groove formation process is best provided after noodle formation.

Next, a more preferred form of the grooved noodles of the present invention, and a method of producing grooved noodles of the present invention, will be described.
In a case where the above-described grooved noodles of the present invention are applied to dry noodles, to further improve noodle quality, the dry noodles are preferably produced by forming raw noodles of a predetermined shape, subjecting the raw noodles to heat treatment for a period of 5 to 60 seconds using saturated steam or superheated steam so as to pregelatinize only the area near the surface of the noodle band, and then drying the noodles under humidity control.

Here, the surface of the noodle band refers to the entire surface of the noodle band, including the surface of the grooves formed on the noodle band.
Pregelatinizing only the area near the surface of the noodle band refers to pregelatinizing only the section on the surface side rather than the entire noodle band, leaving the interior of the noodle band as is. In particular, pregelatinizing approximately 5 to 20% of the length (depth) from the surface in the cross-section of the noodle band to the center (centerline in a case where the cross-sectional shape is a rectangle) of the cross-sectional shape is preferred. Pregelatinizing the area near the surface of the noodle band decreases the melting of components, such as starch components, from the noodle surface when the noodle is heated for eating, thereby improving the quality of the noodle. Further, decreasing the melting makes it possible to significantly decrease the amount of water used for boiling. With the interior of the noodle band left non-pregelatinized, it is possible to achieve in pasta the same favorable texture as when the dry pasta of prior art is cooked. Such an advantage is common to all varieties of noodles.

In terms of the various dry noodles, while pregelatinizing only the area near the surface of the dry noodle is possible by subjecting the noodle to heat treatment for 5 to 60 seconds using saturated steam or superheated steam, utilization of a time within the 5 to 60 seconds that permits pregelatinization of approximately 5 to 20% from the surface of the cross-section of the noodle band using saturated steam or superheated steam, in accordance with the noodle type and shape, is preferred.
In a case where only the area near the surface of the noodles is to be pregelatinized, the heat treatment time is a relatively short 5 to 60 seconds, resulting in no significant difference in the surface pregelatinization level, noodle appearance, or noodle state (stickiness, etc.), regardless of use of saturated steam or superheated steam.

In a case where heat treatment is performed using saturated steam, it is favorable to heat the noodles under normal pressure using saturated steam that is either under normal pressure or pressurized. However, the use of pressurized water vapor is preferred since such pressure shortens the amount of time required to heat only the surface of the raw noodles. For example, a mist of saturated steam at 121°C with a vapor pressure of 1.8kg/cm² is sprayed for 5 to 60 seconds toward formed raw noodles under normal pressure (in the air).

In a case where heat treatment is performed using superheated steam, the level of humidity of the steam is relatively low compared to the saturated steam process, causing the surface of the noodle after heating to be somewhat dry, thereby preventing the noodle bands after heat treatment from sticking together and improving noodle handling. For noodle bands that readily stick to each another as a result of noodle moisture content, shape, and surface state, use of superheated steam is preferred. For example, a mist of overheated steam heated to 170°C is sprayed for about 5 to 20 seconds toward the formed raw noodles under normal pressure (in the air).

During the production of dry noodles to which the grooved noodles of the present invention have been applied, it is best to establish the shape of the raw noodles in such a manner that the raw noodles are the grooved noodles of the present invention when dried. The formation method of the raw noodles is as described above. After the raw noodles are formed, the formed noodles are dried under controlled humidity and then cooled to form the dry noodle product. Drying the noodles under controlled humidity is a process wherein the noodles are dried while humidity is maintained. For example, in the case of pasta, the pasta is dried for 10 to 15 hours under an environment having a temperature of 70°C and a humidity level of 75%. Slowly drying the noodles under such an environment of controlled temperature and controlled humidity makes it possible to prevent cracking of the surface of the noodle and thus obtain a dry noodle having a favorable taste and favorable appearance.

Specific examples of the noodles to which the present invention is applicable include the various types of pasta, soba noodles, udon noodles, and ramen noodles. Further the noodles to which the present invention is applicable can be produced using normal ingredients, similar to the noodles of prior art.

While the above described in detail the grooved noodles according to the present invention, note that the present invention is not limited to the aforementioned embodiments and various modifications and changes may be made without departing from the invention.

### EXAMPLE 1

The present invention was applied to spaghetti and then tested.
100 parts of durum wheat semolina and 30 parts water were mixed together and supplied to an extruder.
The extrusion die used has three wedge-shaped (V-shaped) deformed protrusions alternately positioned in the longitudinal direction of a circular die hole having an inner diameter of 2.45 mm. The noodle obtained from this die has the same cross-sectional shape as that in FIG. 1.

The raw spaghetti obtained from this extruder was then dried under controlled humidity to obtain a dry spaghetti. The geometrical dimensions of the obtained dry spaghetti, when described in accordance with the drawing of the noodle 10 of FIG. 1, include a diameter of X1 = 2.40 mm, wedge-shaped groove depths of T11 = 1.1 mm and T12 = 1.1 mm, angles of the tip area of the wedge-shaped groove of P11 = 35 degrees and P12 = 25 degrees, groove opening widths of W11 = 1.0 mm and W12 = 0.55 mm, and thicknesses A1 to A4 of maximum value = 0.55 mm, minimum value = 0.40 mm, and average value = 0.50 mm. The total area of the grooves was 42% of the area of the circle formed by the major outer shape of the noodle band.

When this dry spaghetti was boiled, the spaghetti was edible in two minutes, and the grooves formed by the deformed wedge-shaped protrusions of the extrusion die closed, making the spaghetti equivalent to a non-grooved spaghetti of 1.6 mm. Note that the boiling time of a non-grooved spaghetti of 1.6 mm of prior art is 7 minutes, and the boiling time of an equivalent grooved spaghetti of 1.7 mm of prior art is 5 minutes.
The spaghetti obtained in this example was comparable to a non-grooved spaghetti of 1.6 mm in appearance, taste, and texture.

### EXAMPLE 2

The present invention was applied to a noodle-type pasta and then tested.
100 parts of durum wheat semolina and 30 parts water were mixed together and supplied to an extruder.
The extrusion die used has a total of four wedge-shaped (V-shaped) deformed protrusions of two different types alternately positioned in the longitudinal direction of a 2.0 mm x 3.0 mm rectangular die hole. The noodle obtained from this die has the same cross-sectional shape as that in the illustrative example FIG. 6.

The raw noodle-type pasta obtained from this extruder was then dried under controlled humidity to obtain a dry noodle-type pasta. The geometrical dimensions of the obtained dry noodle-type pasta, when described in accordance with the drawing of the noodle 60 of FIG. 6, include a short side of X6 = 1.8 mm, a long side of Y6 = 2.8 mm, a formation direction depth of a first wedge-shaped groove (corresponding to the groove 64) of T61 = 1.2 mm, a short-side direction depth thereof of 1.1 mm, a formation direction depth of a second wedge-shaped groove (corresponding to the groove 66) of T62 = 1.4 mm, a short-side direction depth thereof of 1.3 mm, an opening width of the first groove of W61 = 0.5 mm, an opening width of the second groove of W62 = 0.5 mm, and thicknesses F1 to F6 of maximum value = 0.8 mm, minimum value of 0.3 mm, and average value = 0.5 mm. The total of the area of the groove section was 27% of the area of the rectangular shape of the cross-section.

When this dry noodle-shaped pasta was boiled, the pasta was edible in 3 minutes, and the grooves formed by the deformed wedge-shaped protrusions of the extrusion die closed, making the pasta equivalent to a non-grooved noodle of 2.5 x 1.5 mm. Note that the boiling time of a 2.5 x 1.5 mm non-grooved noodle of prior art is 10 minutes.
The noodle-shaped pasta obtained in this illustrative example was comparable to a non-grooved 2.5 x 1.5 mm noodle in appearance, taste, and texture.

### EXAMPLE 3

The present invention was applied to spaghetti and then tested.
100 parts of durum wheat semolina and 30 parts water were mixed together and supplied to an extruder.
The extrusion die used has two opposing deformed wedge-shaped protrusions formed in the longitudinal direction of a circular-shaped die hole having an inner diameter of 2.45 mm, wherein the side of the wedge-shape (V-shape) that is located on the outer peripheral side of the circular shape has a bend. The noodle obtained from this die has the same cross-sectional shape as that in FIG. 9.

The raw spaghetti obtained from this extruder was then dried under controlled humidity to obtain a dry spaghetti. The geometrical dimensions of the obtained dry spaghetti, when described in accordance with the drawing of the noodle 90 of FIG. 9, include a diameter of X9 = 2.30 mm, a width of Y9 = 1.75 mm, an angle of the tip area of the wedge-shaped groove of P9 = 45 degrees, an opening width of the groove of W9 = 0.9 mm, and thicknesses J1 to J4 of maximum value = 0.55 mm, minimum value = 0.45 mm, and average value = 0.50 mm.

When this dry spaghetti was boiled, the spaghetti was edible in 2 minutes, and the grooves formed by the deformed wedge-shaped protrusions of the extrusion die closed, making the spaghetti equivalent to a non-grooved spaghetti of 1.6 mm. Note that the boiling time of a non-grooved spaghetti of 1.6 mm of prior art is 7 minutes, and the boiling time of an equivalent grooved spaghetti of 1.7 mm of prior art is 5 minutes.
The spaghetti obtained in this example was comparable to a non-grooved spaghetti of 1.6 mm in appearance, taste, and texture.

### EXAMPLE 4

A raw spaghetti was formed from an extruder similar to the above example 3, and a mist of saturated steam at 121°C with a vapor pressure of 1.8kg/cm² was sprayed for 30 seconds toward the raw noodle after formation, under normal pressure (in air). When the cross-section with respect to the noodle band direction of the raw spaghetti obtained by this heat treatment was observed using a fluorescent microscope, the area near the surface of the noodle band, that is, the area from the surface of the cross-section of the noodle band to approximately 10% of the length (depth) to the center of the cross-sectional shape was pregelatinized.

The raw spaghetti after heat treatment was then placed under an environment having a 70°C temperature and 75% humidity for 11 hours, and dried under controlled humidity so as to obtain a dry spaghetti. The geometrical dimensions of the obtained dry spaghetti, when described in accordance with the drawing of the noodle 90 of FIG. 9, include a diameter of X9 = 2.35 mm, a width of Y9 = 1.77 mm, an angle of the tip area of the wedge-shaped groove of P9 = 45 degrees, an opening width of the groove of W9 = 0.95 mm, and the thicknesses J1 to J4 of maximum value = 0.55 mm, minimum value = 0.45 mm, and average value = 0.50 mm.

When this dry spaghetti was boiled, the spaghetti was edible in 2 minutes and exhibited superior quality including a lesser amount of melting of components into the boiled liquid than that obtained from the above example 1, and a smooth noodle surface. Further, the grooves formed by the deformed wedge-shaped protrusions of the extrusion die closed, forming a spaghetti equivalent to a 1.6 mm non-grooved spaghetti.
The spaghetti obtained in this example was comparable to a non-grooved spaghetti of 1.6 mm in appearance, taste, and texture.

### INDUSTRIAL APPLICABILITY

The present invention can be applied to the food industry which handles various types of noodles that are boiled and consumed.

## Claims

1. Grooved noodles in which a maximum diameter in the cross-section of a single noodle band is from 1.2 mm to 3.0 mm and the major outer shape thereof is an arc of a circle or ellipse, wherein:
said noodles have a plurality of grooves formed along the longitudinal direction of said noodle band; and
the total area of the section of said plurality of grooves in the cross-section of said noodle band is 20 to 50% of the area of the circle or ellipse formed by the major outer shape of the cross-section of said noodle band,
**CHARACTERIZED IN THAT**
said plurality of grooves comprises a V-shaped first groove (94a) and a V-shaped second groove (94b) disposed at positions in symmetry with respect to a center point of the cross-section of said noodle band with the adjacent sides of the first groove and the second groove parallel so as to form a parallel area having a constant thickness (J4) between the first groove and the second groove, and
a depth (T9) from an opening end of each of the first groove (94a) and the second groove (94b) to a tip area thereof is greater than one-half of a diameter in the formation direction of the first groove and the second groove of the cross-section.

2. The grooved noodles according to claim 1, wherein the ratio in the cross-section of said noodle band between the thickness of at least one section of said noodle band adjacent to said groove (94a, 94b) and an opening width of each of said grooves is 1.0 : 0.5 to 2.0.

3. The grooved noodles according to claim 1 or 2, wherein the thickness (J1, J2, J3, J4) of the cross-section of said noodle band is 0.3 mm to 0.8 mm.

4. The grooved noodles according to any one of claims 1 to 3, wherein said grooved noodles are obtained by subjecting formed raw noodles to heat treatment for 5 to 60 seconds using saturated steam or superheated steam so as to pregelatinize only the area near the surface of said noodle band, and then drying the noodles under controlled humidity.

5. A method of producing grooved noodles in which the maximum diameter in the cross-section of a single noodle band is from 1.2 mm to 3.0 mm and the major outer shape thereof is the arc of a circle or an ellipse, said noodles having a plurality of grooves formed along the longitudinal direction of said noodle band and the thickness in the cross-section of said noodle band being equivalent to 0.3 mm to 0.8 mm, **CHARACTERIZED IN THAT**
said method comprises the steps of:
forming raw noodles into a predetermined shape;
subjecting said formed raw noodles to heat-treatment for a period of 5 to 60 seconds using saturated steam or superheated steam so as to pregelatinize only the area near the surface of said noodle band; and
drying under controlled humidity said raw noodles that were subjected to said heat treatment,
said plurality of grooves comprises a V-shaped first groove (94a) and a V-shaped second groove (94b) disposed at positions in symmetry with respect to a center point of the cross-section of said noodle band with the adjacent sides of the first groove and the second groove parallel so as to form a parallel area having a constant thickness (J4) between the first groove and the second groove, and
a depth (T9) from an opening end of each of the first groove and the second groove to a tip area thereof is greater than one-half of a diameter in the formation direction of the first groove and the second groove of the cross-section.

6. Grooved noodles in which a maximum diameter in the cross-section of a single noodle band is from 1.2 mm to 3.0 mm and the major outer shape thereof is an arc of a circle or ellipse, wherein:
said noodles have a plurality of grooves formed along the longitudinal direction of said noodle band; and
the total area of the section of said plurality of grooves in the cross-section of said noodle band is 20 to 50% of the area of the circle or ellipse formed by the major outer shape of the cross-section of said noodle band,
**CHARACTERIZED IN THAT**
said plurality of grooves comprises a first groove (14, 24) formed along a centerline of the noodle band in the cross-section of said noodle band and a pair of second grooves (16, 26) disposed on both sides of the first groove (14, 24) and having opening ends which face in a direction opposite to an opening end of the first groove (14, 24) in the cross-section of said noodle band,
the first groove (14, 24) and the second grooves (16, 26) are disposed symmetrically with respect to the centerline of the noodle band,
a depth (T11, T21) from the opening end of the first groove (14, 24) to a tip area thereof and the depth (T12, T22) from the opening end of each second groove (16, 26) to the tip area thereof are greater than one-half of the length of the cross-section of said noodle band along the centerline,and
each of said plurality of grooves forms a V-shape or U-shape toward the center of the cross-section of said noodle band.

7. The grooved noodles according to claim 6, wherein the ratio in the cross-section of said noodle band between the thickness of at least one section of said noodle band adjacent to said groove and an opening width of said groove is 1.0 : 0.7 to 1.3.

8. The grooved noodles according to claim 6 or 7, wherein the thickness of the cross-section of said noodle band is 0.3 mm to 0.8 mm.

9. The grooved noodles according to any one of claims 6 to 8, wherein said grooved noodles are obtained by subjecting formed raw noodles to heat treatment for 5 to 60 seconds using saturated steam or superheated steam so as to pregelatinize only the area near the surface of said noodle band, and then drying the noodles under controlled humidity.

10. A method of producing grooved noodles in which the maximum diameter in the cross-section of a single noodle band is from 1.2 mm to 3.0 mm and the major outer shape thereof is the arc of a circle or an ellipse, said noodles having a plurality of grooves formed along the longitudinal direction of said noodle band and the thickness in the cross-section of said noodle band being equivalent to 0.3 mm to 0.8 mm, **CHARACTERIZED IN THAT**
said method comprises the steps of:
forming raw noodles into a predetermined shape;
subjecting said formed raw noodles to heat-treatment for a period of 5 to 60 seconds using saturated steam or superheated steam so as to pregelatinize only the area near the surface of said noodle band; and
drying under controlled humidity said raw noodles that were subjected to said heat treatment,
said plurality of grooves comprises a first groove (14, 24) formed along a centerline of the noodle band in the cross-section of said noodle band and a pair of second grooves (16, 26) disposed on both sides of the first groove (14, 24) and having opening ends which face in a direction opposite to an opening end of the first groove (14, 24) in the cross-section of said noodle band,
the first groove (14, 24) and the second grooves (16, 26) are disposed symmetrically with respect to the centerline of the noodle band, and
a depth (T11, T21) from the opening end of the first groove (14, 24) to a tip area thereof and the depth (T12, T22) from the opening end of each second groove (16, 26) to the tip area thereof are greater than one-half of the length of the cross-section of said noodle band along the centerline.

## Patentansprüche

1. Gerillte Nudeln, bei denen ein maximaler Durchmesser im Querschnitt eines einzelnen Nudelbandes 1,2 bis 3,0 mm beträgt und der größte Teil der äußeren Form des Nudelbandes ein Kreis- oder Ellipsenbogen ist, wobei:
die Nudeln mehrere Rillen aufweisen, die in Längsrichtung des Nudelbandes gebildet sind, und
die Gesamtschnittfläche der mehreren Rillen im Querschnitt des Nudelbandes 20 bis 50 % der Fläche des Kreises oder der Ellipse beträgt, die durch den größten Teil der äußeren Form des Querschnittes des Nudelbandes gebildet wird,
**dadurch gekennzeichnet, dass**
die mehren Rillen eine v-förmige erste Rille (94a) und eine v-förmige zweite Rille (94b) umfassen, die im Verhältnis zu einem Mittelpunkt des Querschnittes des Nudelbandes an symmetrischen Positionen angeordnet sind, wobei die nebeneinanderliegenden Seiten der ersten Rille und der zweiten Rille derart parallel liegen, dass zwischen der ersten Rille und der zweiten Rille ein paralleler Bereich gebildet wird, der eine gleichbleibende Dicke (J4) aufweist, und
eine Tiefe (T9) von einem offenen Ende jeweils der ersten Rille (94a) und der zweiten Rille (94b) zu einem Bereich der Spitzen der Rillen in Richtung der Ausbildung der ersten Rille und der zweiten Rille mehr als die Hälfte des Durchmessers des Querschnittes beträgt.

2. Gerillte Nudeln nach Anspruch 1, wobei im Querschnitt des Nudelbandes das Verhältnis zwischen der Dicke mindestens einer Schnittfläche des Nudelbandes, die an der Rille (94a, 94b) liegt, und einer Öffnungsbreite jeder der Rillen 1,0:0,5 bis 2,0 beträgt.

3. Gerillte Nudeln nach Anspruch 1 oder 2, wobei die Dicke (J1, J2, J3, J4) des Querschnittes des Nudelbandes 0,3 mm bis 0,8 mm beträgt.

4. Gerillte Nudeln nach einem der Ansprüche 1 bis 3, wobei die gerillten Nudeln erzielt werden, indem gebildete Rohnudeln mit Hilfe gesättigten oder überhitzten Dampfes 5 bis 60 Sekunden lang einer Wärmebehandlung unterzogen werden, so dass nur der Bereich nahe der Oberfläche des Nudelbandes vorgelatiniert wird, und die Nudeln dann unter gesteuerter Luftfeuchte getrocknet werden.

5. Verfahren zur Herstellung gerillter Nudeln, bei denen der maximale Durchmesser im Querschnitt eines einzelnen Nudelbandes 1,2 bis 3,0 mm beträgt und der größte Teil der äußeren Form des Nudelbandes ein Kreis- oder Ellipsenbogen ist, wobei die Nudeln mehrere Rillen aufweisen, die in Längsrichtung des Nudelbandes gebildet sind, und die Dicke des Querschnittes des Nudelbandes 0,3 mm bis 0,8 mm entspricht, **dadurch gekennzeichnet dass**
das Verfahren folgende Schritte umfasst:
Bilden von Rohnudeln mit einer vorbestimmten Form,
Unterziehen der gebildeten Rohnudeln einer Wärmebehandlung mit Hilfe von gesättigtem oder überhitztem Dampf für 5 bis 60 Sekunden, so dass nur der Bereich nahe der Oberfläche des Nudelbandes vorgelatiniert wird, und
Trocknen der Rohnudeln, die der Wärmebehandlung unterzogen wurden, unter gesteuerter Luftfeuchte,
wobei die mehreren Rillen eine v-förmige erste Rille (94a) und eine v-förmige zweite Rille (94b) umfassen, die im Verhältnis zu einem Mittelpunkt des Querschnittes des Nudelbandes an symmetrischen Positionen angeordnet sind, wobei die nebeneinanderliegenden Seiten der ersten Rille und der zweiten Rille derart parallel liegen, dass zwischen der ersten Rille und der zweiten Rille ein paralleler Bereich gebildet wird, der eine gleichbleibende Dicke (J4) aufweist, und
wobei eine Tiefe (T9) von einem offenen Ende jeweils der ersten Rille und der zweiten Rille zu einem Bereich der Spitzen der Rillen in Richtung der Ausbildung der ersten Rille und der zweiten Rille mehr als die Hälfte des Durchmessers des Querschnittes beträgt.

6. Gerillte Nudeln, bei denen ein maximaler Durchmesser im Querschnitt eines einzelnen Nudelbandes 1,2 bis 3,0 mm beträgt und der größte Teil der äußeren Form des Nudelbandes ein Kreis- oder Ellipsenbogen ist, wobei:
die Nudeln mehrere Rillen aufweisen, die in Längsrichtung des Nudelbandes gebildet sind, und
die Gesamtschnittfläche der mehreren Rillen im Querschnitt des Nudelbandes 20 bis 50 % der Fläche des Kreises oder der Ellipse beträgt, die durch den größten Teil der äußeren Form des Querschnittes des Nudelbandes gebildet wird,
**dadurch gekennzeichnet, dass**
die mehren Rillen eine erste Rille (14, 24) umfassen, die entlang einer Mittellinie im Querschnitt des Nudelbandes gebildet ist, und ein Paar zweiter Rillen (16, 26), die an beiden Seiten der ersten Rille (14, 24) angeordnet sind und offene Enden aufweisen, die in eine Richtung weisen, die zu einem offenen Ende der ersten Rille (14, 24) im Querschnitt des Nudelbandes entgegengesetzt liegt,
die erste Rille (14, 24) und die zweiten Rillen (16, 26) im Verhältnis zu einer Mittellinie des Nudelbandes an symmetrischen Positionen angeordnet sind,
eine Tiefe (T11, T21) vom offenen Ende der ersten Rille (14, 24) zu einem Bereich ihrer Spitze und die Tiefe (T12, T22) vom offenen Ende jeder der zweiten Rillen (16, 26) zu ihrem Bereich der Spitze mehr als die Hälfte des Durchmessers des Querschnittes entlang der Mittellinie beträgt und
jede der mehreren Rillen eine V-Form oder eine U-Form zur Mitte des Querschnittes des Nudelbandes hin bildet.

7. Gerillte Nudeln nach Anspruch 6, wobei im Querschnitt des Nudelbandes das Verhältnis zwischen der Dicke mindestens einer Schnittfläche des Nudelbandes, die an der Rille liegt, und einer Öffnungsbreite jeder der Rillen 1,0:0,7 bis 1,3 beträgt.

8. Gerillte Nudeln nach Anspruch 6 oder 7, wobei die Dicke des Querschnittes des Nudelbandes 0,3 mm bis 0,8 mm beträgt.

9. Gerillte Nudeln nach einem der Ansprüche 6 bis 8, wobei die gerillten Nudeln erzielt werden, indem gebildete Rohnudeln mit Hilfe gesättigten oder überhitzten Dampfes 5 bis 60 Sekunden lang einer Wärmebehandlung unterzogen werden, so dass nur der Bereich nahe der Oberfläche des Nudelbandes vorgelatiniert wird, und die Nudeln dann unter gesteuerter Luftfeuchte getrocknet werden.

10. Verfahren zur Herstellung gerillter Nudeln, bei denen ein maximaler Durchmesser im Querschnitt eines einzelnen Nudelbandes 1,2 bis 3,0 mm beträgt und wobei der größte Teil der äußeren Form des Nudelbandes ein Kreis- oder Ellipsenbogen ist, wobei die Nudeln mehrere Rillen aufweisen, die in Längsrichtung des Nudelbandes gebildet sind, und die Dicke des Querschnittes des Nudelbandes 0,3 mm bis 0,8 mm entspricht, **dadurch gekennzeichnet dass**
das Verfahren folgende Schritte umfasst:
Bilden von Rohnudeln mit einer vorbestimmten Form,
Unterziehen der gebildeten Rohnudeln einer Wärmebehandlung mit Hilfe von gesättigtem oder überhitztem Dampf für 5 bis 60 Sekunden, so dass nur der Bereich nahe der Oberfläche des Nudelbandes vorgelatiniert wird, und
Trocknen der Rohnudeln, die der Wärmebehandlung unterzogen wurden, unter gesteuerter Luftfeuchte,
wobei die mehreren Rillen eine erste Rille (14, 24) umfassen, die entlang einer Mittellinie im Querschnitt des Nudelbandes gebildet ist, und ein Paar zweiter Rillen (16, 26), die an beiden Seiten der ersten Rille (14, 24) angeordnet sind und offene Enden aufweisen, die in eine Richtung weisen, die zu einem offenen Ende der ersten Rille (14, 24) im Querschnitt des Nudelbandes entgegengesetzt liegt,
wobei die erste Rille (14, 24) und die zweiten Rillen (16, 26) im Verhältnis zu einer Mittellinie des Nudelbandes an symmetrischen Positionen angeordnet sind, und
wobei eine Tiefe (T11, T21) vom offenen Ende der ersten Rille (14, 24) zu einem Bereich ihrer Spitze und die Tiefe (T12, T22) vom offenen Ende jeder der zweiten Rillen (16, 26) zu ihrem Bereich der Spitze mehr als die Hälfte des Durchmessers des Querschnittes entlang der Mittellinie beträgt.

## Revendications

1. Nouilles rainurées dans lesquelles un diamètre maximal de la section transversale d'une seule bande de nouilles vaut de 1,2 mm à 3,0 mm et la forme extérieure principale de celle-ci est un arc de cercle ou une ellipse, dans lesquelles :
lesdites nouilles comportent une pluralité de rainures formées le long de la direction longitudinale de ladite bande de nouilles ; et
l'aire totale de la section de ladite pluralité de rainures dans la section transversale de ladite bande de nouilles vaut de 20 à 50 % de l'aire du cercle ou de l'ellipse formé(e) par la forme extérieure principale de la section transversale de ladite bande de nouilles,
**caractérisées en ce que**
ladite pluralité de rainures comprend une première rainure en V (94a) et une deuxième rainure en V (94b) placées en des positions en symétrie par rapport à un point central de la section transversale de ladite bande de nouilles avec les côtés adjacents de la première rainure et de la deuxième rainure parallèles afin de former une région parallèle ayant une épaisseur constante (J4) entre la première rainure et la deuxième rainure, et
une profondeur (T9) d'une extrémité d'ouverture de chacune des première rainure (94a) et deuxième rainure (94b) à une région de bout de celles-ci est supérieure à la moitié d'un diamètre dans la direction de formation de la première rainure et de la deuxième rainure de la section transversale.

2. Nouilles rainurées selon la revendication 1, dans lesquelles le rapport dans la section transversale de ladite bande de nouilles entre l'épaisseur d'au moins une section de la bande de nouilles adjacente à ladite rainure (94a, 94b) et une largeur d'ouverture de chacune desdites rainures vaut de 1,0/0,5 à 2,0.

3. Nouilles rainurées selon la revendication 1 ou 2, dans lesquelles l'épaisseur (J1, J2, J3, J4) de la section transversale de ladite bande de nouilles vaut de 0,3 à 0,8 mm.

4. Nouilles rainurées selon l'une quelconque des revendications 1 à 3, dans lesquelles lesdites nouilles rainurées sont obtenues en soumettant des nouilles crues formées à un traitement thermique pendant 5 à 60 secondes en utilisant de la vapeur saturée ou de la vapeur surchauffée afin de prégélatiniser seulement la région située près de la surface de ladite bande de nouilles, puis en séchant les nouilles sous une humidité contrôlée.

5. Procédé de production de nouilles rainurées dans lesquelles le diamètre maximal de la section transversale d'une seule bande de nouilles vaut de 1,2 mm à 3,0 mm et la forme extérieure principale de celle-ci est un arc de cercle ou une ellipse, lesdites nouilles ayant une pluralité de rainures formées le long de la direction longitudinale de ladite bande de nouilles et l'épaisseur dans la section transversale de ladite bande de nouilles étant équivalente à 0,3 mm à 0,8 mm, **caractérisé en ce que**
ledit procédé comprend les étapes suivantes :
donner à des nouilles crues une forme prédéterminée ;
soumettre lesdites nouilles crues formées à un traitement thermique pendant un intervalle de 5 à 60 secondes en utilisant de la vapeur saturée ou de la vapeur surchauffée afin de prégélatiniser seulement la région située près de la surface de ladite bande de nouilles ; et
sécher sous une humidité contrôlée lesdites nouilles crues qui ont subi ledit traitement thermique,
ladite pluralité de rainures comprend une première rainure en V (94a) et une deuxième rainure en V (94b) placées en des positions en symétrie par rapport à un point central de la section transversale de ladite bande de nouilles avec les côtés adjacents de la première rainure et de la deuxième rainure parallèles afin de former une région parallèle ayant une épaisseur constante (J4) entre la première rainure et la deuxième rainure, et
une profondeur (T9) d'une extrémité d'ouverture de chacune des première rainure et deuxième rainure à une région de bout de celles-ci est supérieure à la moitié d'un diamètre dans la direction de formation de la première rainure et de la deuxième rainure de la section transversale.

6. Nouilles rainurées dans lesquelles un diamètre maximal de la section transversale d'une seule bande de nouilles vaut de 1,2 mm à 3,0 mm et la forme extérieure principale de celle-ci est un arc de cercle ou une ellipse, dans lesquelles :
lesdites nouilles comportent une pluralité de rainures formées le long de la direction longitudinale de ladite bande de nouilles ; et
l'aire totale de la section de ladite pluralité de rainures dans la section transversale de ladite bande de nouilles vaut de 20 à 50 % de l'aire du cercle ou de l'ellipse formé(e) par la forme extérieure principale de la section transversale de ladite bande de nouilles,
**caractérisées en ce que**
ladite pluralité de rainures comprend une première rainure (14, 24) formée le long d'un axe de la bande de nouilles dans la section transversale de ladite bande de nouilles et une paire de deuxièmes rainures (16, 26) disposées de chaque côté de la première rainure (14, 24) et ayant des extrémités d'ouverture qui sont orientées dans une direction opposée à une extrémité d'ouverture de la première rainure (14, 24) dans la section transversale de ladite bande de nouilles,
la première rainure (14, 24) et les deuxièmes rainures (16, 26) sont disposées de façon symétrique par rapport à l'axe de la bande de nouilles,
une profondeur (T11, T21) d'une extrémité d'ouverture de la première rainure (14, 24) à une région de bout de celle-ci et la profondeur (T12, T22) de l'extrémité d'ouverture de chaque deuxième rainure (16, 26) à la région de bout de celle-ci sont supérieures à la moitié de la longueur de la section transversale de ladite bande de nouilles le long de l'axe, et
chacune des rainures de ladite pluralité de rainures forme un V ou un U vers le centre de la section transversale de ladite bande de nouilles.

7. Nouilles rainurées selon la revendication 6, dans lesquelles le rapport dans la section transversale de ladite bande de nouilles entre l'épaisseur d'au moins une section de la bande de nouilles adjacente à ladite rainure et une largeur d'ouverture de ladite rainure vaut de 1,0/0,7 à 1,3.

8. Nouilles rainurées selon la revendication 6 ou 7, dans lesquelles l'épaisseur de la section transversale de ladite bande de nouilles vaut de 0,3 à 0,8 mm.

9. Nouilles rainurées selon l'une quelconque des revendications 6 à 8, dans lesquelles lesdites nouilles rainurées sont obtenues en soumettant des nouilles crues formées à un traitement thermique pendant 5 à 60 secondes en utilisant de la vapeur saturée ou de la vapeur surchauffée afin de prégélatiniser seulement la région située près de la surface de ladite bande de nouilles, puis en séchant les nouilles sous une humidité contrôlée.

10. Procédé de production de nouilles rainurées dans lesquelles le diamètre maximal de la section transversale d'une seule bande de nouilles vaut de 1,2 mm à 3,0 mm et la forme extérieure principale de celle-ci est un arc de cercle ou une ellipse, lesdites nouilles ayant une pluralité de rainures formées le long de la direction longitudinale de ladite bande de nouilles et l'épaisseur dans la section transversale de ladite bande de nouilles étant équivalente à 0,3 mm à 0,8 mm, **caractérisé en ce que**
ledit procédé comprend les étapes suivantes :
donner à des nouilles crues une forme prédéterminée ;
soumettre lesdites nouilles crues formées à un traitement thermique pendant un intervalle de 5 à 60 secondes en utilisant de la vapeur saturée ou de la vapeur surchauffée afin de prégélatiniser seulement la région située près de la surface de ladite bande de nouilles ; et
sécher sous une humidité contrôlée lesdites nouilles crues qui ont subi ledit traitement thermique,
ladite pluralité de rainures comprend une première rainure (14, 24) formée le long d'un axe de la bande de nouilles dans la section transversale de ladite bande de nouilles et une paire de deuxièmes rainures (16, 26) disposées de chaque côté de la première rainure (14, 24) et ayant des extrémités d'ouverture qui sont orientées dans une direction opposée à une extrémité d'ouverture de la première rainure (14, 24) dans la section transversale de ladite bande de nouilles,
la première rainure (14, 24) et les deuxièmes rainures (16, 26) sont disposées de façon symétrique par rapport à l'axe de la bande de nouilles, et
une profondeur (T11, T21) d'une extrémité d'ouverture de la première rainure (14, 24) à une région de bout de celle-ci et la profondeur (T12, T22) de l'extrémité d'ouverture de chaque deuxième rainure (16, 26) à la région de bout de celle-ci sont supérieures à la moitié de la longueur de la section transversale de ladite bande de nouilles le long de l'axe.
